# EUROPEAN PATENT SPECIFICATION

(11) **EP 4 408 170 B1**
(45) Date of publication and mention of the grant of the patent: **06.05.2026**
(21) Application number: 22793835.4
(22) Date of filing: 23.09.2022
(51) Int. Cl.: A01N 3/00, A01N 59/06, A01N 59/16, A01P 15/00, A01P 3/00, A01N 59/08, A01N 37/04, A01N 25/10, A01N 25/34, A01N 37/06, B65D 81/28, B65D 85/34, C08J 7/04, C09D 7/63

(54) **ANTIMICROBIAL PACKAGING**
ANTIMIKROBIELLE VERPACKUNG
EMBALLAGE ANTIMICROBIEN

(30) Priority: 29.09.2021 ZA 202107306
(43) Date of publication of application: 07.08.2024
(73) Proprietor: Superior Special Projects (Pty) Ltd, 7405 Western Province (ZA)
(72) Inventor: WILLIAMS, Mark, 7405 Western Province (ZA)
(74) Representative: Lewis Silkin LLP
(86) International application number: PCT/IB2022/059042
(87) International publication number: WO 2023/052921

(56) References cited:
- WO-A1-2015/130992
- WO-A1-2017/027560

## Description

### FIELD OF THE INVENTION

This invention relates to a preservative and/or antimicrobial composition for inclusion in an active substrate and/or a solvent-based coating for preservation of fruit, vegetables or herbs as well as an active substrate including the preservative and/or antimicrobial composition, or a solvent-based coating composition including the preservative and/or antimicrobial composition, or an active substrate including the preservative and/or antimicrobial composition and coated with the solvent-based coating composition including the preservative and/or antimicrobial composition for use in the preservation of fruit, vegetables or herbs.

### BACKGROUND OF THE INVENTION

Today, consumers expect to be able to purchase a wide range of fresh produce or botanicals, including fruit and vegetables, flowers and herbs throughout the year and regardless of whether the product is produced locally or must be imported.

It is important to be able to maintain a shelf-life of at least a few days in order for such products to be commercially viable.

There are a number of commercial packaging products for fresh fruit and vegetables as well as flowers which preserve the products and prevent microbiological growth and spoilage of these fresh products. Most commonly, these include the use of a sulphur dioxide or chlorine generating compound activated under conditions of humidity.

Use of sulfur dioxide generating compounds are less desirable now, due to country and product-specific limitations on the allowable sulfur dioxide content. In addition, depending on the concentration of sulfur dioxide released, this can result in sulfur dioxide damage to the fresh produce, such as bleaching and burning, in particular with regard to sentitive produce such as berries. One way that sulfur dioxide generating compounds have been used in packaging materials to address these issues are to use multi-layer laminate products or pads that comprise the sulfur dioxide generating compounds within a matrix in the packaging, thereby to prevent direct contact of the sulfur dioxide generating compounds with the packaged fresh produce and to manage the concentration of sulfur dioxide generated by the sulfur dioxide generating compounds over time within the packaging material. However, these multi-layer materials are complex and expensive to produce, requiring multi-step fabrication and processing.

It would be useful if a simpler and less harsh preservative and/or antimicrobial product for packaging fresh produce including fruit, vegetables and/or herbs was available which was still able to provide a preservative and/or antimicrobial effect.

For example, WO 2015/130992 describes food packaging and commercial materials and processes that incorporate the release of chlorine dioxide gas to extend freshness and preserve integrity and shelf-life of packaged food.

A further disadvantage of the commercial products used presently for preservation of fresh produce is that these are presently typically made from polymers that are not easily recyclable or potentially even biodegradable or compostable.

It would therefore be highly beneficial to develop an environmentally friendly preservative and/or antimicrobial product that is recyclable and possibly may even be biodegradable or compostable. It would be further useful if such a product could be simple and cost effective to produce.

### SUMMARY OF THE INVENTION

According to a first aspect of the invention, there is provided a preservative and/or antimicrobial composition for inclusion in a substrate to form an active substrate and/or in a solvent-based coating for preservation of fruit, vegetables or herbs, comprising or consisting of the following combination of ingredients:
calcium chloride (CaCl₂);
sodium chloride (NaCl);
citric acid;
calcium hypochlorite (Ca(OCl)₂);
nano-silver (Nano-Ag); and
one or more dessicants, carriers, including polyethylenes and process aids,
including one or more zeolites, silica, stearates, including calcium stearate or a combination thereof,

wherein the substrate comprises or consists of a substrate polymer selected from polyethylene including low density polyethylene (LDPE) or linear low density polyethylene (LLDPE) or a blend thereof, polyethylene terephthalate (PET), polypropylene (PP), biaxially oriented polypropylene (BOPP), cellulose, bio-polymers, thermoplastic starch (TPS), polylactic acid (PLA), non-woven PP and non-woven PET; and
wherein the solvent-based coating is formulated for coating one or both surfaces of a substrate comprising a single layer substrate or a multi-layer substrate, including a laminated multi-layer substrate, the substrate being selected from the group comprising or consisting of paper, polyethylene including low LDPE or LLDPE or a blend thereof, PET, PP, BOPP, cellulose, bio-polymers, TPS, PLA, non-woven PP and non-woven PET, the active substrate, or a portion thereof and comprises or consists of the following ingredients:
   a solvent-based urethane composition with a greater part of a ester blend, including an elastomeric aliphatic solvent-based urethane;
   one or more solvents selected from the group comprising: a polar aprotic solvent, further including ethyl acetate; a polar protic solvent, further including ethanol; and one or more organic solvents further including one or more glycol ethers, including ethoxy propanol, n-propyl acetate and/or 1-propyl acetate or any combination of said solvents;
   a binder including nitrocellulose, further including a nitrocellulose RS grade 1/8 sec varnish;
   optionally a slip, scratch or rub resistance, gloss retention and overprintability additive, including a micronized spherical Fischer-Tropsch linear hydrocarbon chain hardwax, including a 50% Fischer-Tropsch liquid wax mixture; and
   optionally a viscosity modifier including bentonite clay organically modified with a quaternary alkylammonium compound.

In one embodiment of the invention, the solvent-based coating comprises or consists of:
an elastomeric aliphatic solvent-based urethane with a greater part of a ester blend;
a polar aprotic solvent, further including ethyl acetate;
a polar protic solvent, further including ethanol;
one or more organic solvents further including one or more glycol ethers, including ethoxy propanol, n-propyl acetate and/or 1-propyl acetate;
a slip, scratch or rub resistance, gloss retention and overprintability additive, including a micronized spherical Fischer-Tropsch linear hydrocarbon chain hardwax, including a 50% Fischer-Tropsch liquid wax mixture;
a nitrocellulose varnish, including a nitrocellulose RS grade 1/8 sec varnish; and
a viscosity modifier including bentonite clay organically modified with a quaternary alkylammonium compound.

The solvent-based coating may be used for coating one or both surfaces of a substrate selected from the group comprising or consisting of paper, polyethylene including low LDPE or LLDPE or a blend thereof, PET, PP, BOPP, cellulose, bio-polymers, TPS, PLA, non-woven PP and non-woven PET or a portion thereof, including the active substrate.

The solvent-based coating may be used for coating a substrate selected from the group comprising a single layer substrate or a multi-layer substrate, including a laminated multi-layer substrate.

In one embodiment of the invention, the solvent-based coating may be used for coating a substrate selected from the group consisting of paper, a substrate comprising a blend of LDPE and LLDPE, and a substrate comprising TPS. In another embodiment of the invention, the solvent-based coating may be used for coating the active substrate.

In one embodiment of the invention the solvent-based coating composition in which the preservative and/or antimicrobial composition is included comprises or consists of a mixture of the following ingredients:
(i) a combination of preservative and/or antimicrobial agents provided as percentage weight / weight (% (w/w)) of the combination of preservative and/or antimicrobial agents selected from the group comprising or consisting of:
0,003% to 0,08% (w/w), or 0,008 % to 0,05 % (w/w), or 0,01 % to 0,05 % (w/w), or 0,05 % to 0,08 % (w/w) nano-silver (nano-Ag), 1,0% to 6,5% (w/w), or 2,0 % to 5,0 % (w/w), or 3,0 % to 5,5 % (w/w), or 4,0 % to 6,5 % (w/w), calcium hypochlorite (Ca(OCl)₂), 0,5% to 6,5% (w/w), or 2,0 % to 5,0 % (w/w), or 3,0 % to 5,5 % (w/w), or 4,0 % to 6,5 % (w/w), sodium chloride (NaCl),
1,0% to 10,0% (w/w), or 2,0% to 6,0% (w/w), or 4,0 to 8,0% or 5,0 to 10,0% (w/w) citric acid,
0,05% to 0,65% (w/w), or 0,20 % to 0,50 % (w/w), or 0,30 % to 0,55 % (w/w), or 0,40 % to 0,65 % (w/w) calcium chloride (CaCl₂), and additional one or more dessicants, carriers, including polyethylenes and process aids, including one or more zeolites, silica, stearates, including calcium stearate to make up the remainder of the % (w/w) of the combination of preservative and/or antimicrobial agents; and

(ii) a solvent-based coating composition provided as % (w/w) comprising or consisting of the following ingredients:

| **Component** | **% Amount (w/w)** |
|---|---|
| solvent-based urethane with a greater part of a ester blend | 45 - 55% |
| one or more solvents selected from the group comprising: a polar aprotic solvent, further | 25 - 35% |
| including ethyl acetate; a polar protic solvent, further including ethanol; and one or more organic solvents further including one or more glycol ethers, including ethoxy propanol, n-propyl acetate and/or 1-propyl acetate or any combination of said solvents | |
| slip, scratch or rub resistance, gloss retention and overprintability additive, including micronized spherical Fischer-Tropsch linear hydrocarbon chain hardwax including a 50% Fischer-Tropsch liquid wax mixture | 1 - 5% |
| a binder including nitrocellulose, further including a nitrocellulose RS grade 1/8 sec varnish | 20 - 30% |
| a viscosity modifier including bentonite clay organically modified with a quaternary alkylammonium compound | 8 - 12% |

wherein the ratio of the preservative and/or antimicrobial agent combination to the solvent-based coating composition in the mixture is about 40:60 to 90:10, or about 50:50, or about 60:40, or about 70:30, or about 80:20 respectfully.

More specifically, the solvent-based coating composition may comprise or consist of the following ingredients:

| **Component** | **% Amount (w/w)** |
|---|---|
| Elastomeric aliphatic solvent-based urethane | 30.7 |
| Polar aprotic solvent including ethyl acetate | 5.2 |
| Ethanol 95% | 31.7 |
| Organic solvent including a glycol ether including ethoxy propanol | 9.7 |
| Organic solvent including n-propyl acetate or 1-propyl acetate | 8.2 |
| Slip, scratch or rub resistance, gloss retention and overprintability additive, including micronized spherical Fischer-Tropsch linear hydrocarbon chain hardwax | 1.0 |
| Binder including nitrocellulose, including nitrocellulose RS grade 1/8 sec | 10.2 |
| Viscosity modifier including bentonite clay organically modified with a quaternary alkylammonium compound | 3.3 |
| Total | 100 |

In one embodiment of the invention the active substrate containing the preservative and/or antimicrobial composition comprises or consists of a mixture of the following ingredients:
(i) a combination of preservative and/or antimicrobial agents provided as % (w/w) selected from the group comprising or consisting of:
   0,10 - 4,00 % (w/w), or 0,15 - 2,00 % (w/w), or 0,2 - 1,00 % (w/w) or 0.10 to 0.50 (w/w) nano-Ag,
   0,05 - 4,00 % (w/w), or 0,15 - 2,50 % (w/w), or 1,50 - 3,50 % (w/w), or 2,00 - 4,00 % (w/w) Ca(OCl)₂,
   0,05 - 4,00 % (w/w), or 0,15 - 2,50 % (w/w), or 1,50 - 3,50 % (w/w), or 2,50 - 4,00 % (w/w) sodium chloride (NaCl),
   0,1% - 8,0 % (w/w), or 3,0% - 7,5 % (w/w), or 4,0% - 7,5 % (w/w), or 5,0% - 8,0 % citric acid,
   0,008 - 1,000% (w/w), or 0,020 - 0,100% (w/w), or 0,080 - 0,500% (w/w), or 0,300 to 1,000% (w/w) calcium chloride (CaCl₂), and additional one or more dessicants, carriers, including polyethylenes and process aids, including one or more zeolites, silica, stearates, including calcium stearate to make up the remainder of the % (w/w) of the combination of preservative and/or antimicrobial agents; and
(ii) a substrate polymer selected from polyethylene including LDPE or LLDPE or a blend thereof, PET, PP, BOPP, cellulose, bio-polymers, TPS, PLA, non-woven PP and non-woven PET,
wherein the ratio of the combination of preservative and/or antimicrobial agents to the substrate polymer in the mixture is from 1,4 : 98,6 to 6,0 : 94,0, or from 2,5 : 97,5 to 5,0 : 95,0, or from 4,0 : 96,0 to 6,0 : 94,0.

According to a further aspect of the invention there is provided a substrate, including an active substrate according to the invention coated on one or both surfaces, or a portion thereof, with a monolayer or with a plurality of layers of the preservative and/or antimicrobial coating composition of the invention, wherein the substrate is selected from the group comprising or consisting of paper, polyethylene LDPE or LLDPE or a blend thereof, PET, PP, BOPP, cellulose, bio-polymers, TPS, PLA, non-woven PP and non-woven PET. Preferably, the substrate is paper, a substrate comprising a blend of LDPE and LLDPE or TPS or is the active substrate.

Alternatively, one or more additional coating layer(s) comprising one or more oxygen transmission rate (OTR) and/or moisture vapour transmission rate (MVTR) modifier(s) which are well known in the art may be applied to one or both surfaces of the substrate or a portion thereof in addition to the one or more layers of preservative and/or antimicrobial coating composition(s).

The preservative and/or antimicrobial coated layer(s) may be applied to the substrate surface prior to or subsequent to application of the one or more OTR and/or MVTR coating layer(s).

Furthermore, the one or more preservative and/or antimicrobial coating composition(s) and/or additional coating layer(s) may comprise one or more coloured pigment(s) and/or ultra violet inhibitor compound(s), which are well known in the art and commercially available depending on the product desired to be included.

The active substrate or coated substrate, including the active, coated substrate according to the invention may be a film or sheet, or may be processed to form one or more of a liner, cover, pad and/or bag. The liner, cover, pad and/or bag may comprise a plurality of perforated apertures.

The film, sheet, liner, cover, pad and/or bag formed from or comprising the coated substrate may be used for packaging fruit, vegetables or herbs, thereby to preserve them wherein the preservation is to provide browning and/or dessication, including of stems and/or fruit and/or prevent, inhibit, control, or delay growth of, or kill fungi, including *Botrytis* sp. fungi.

According to a further aspect of the invention there is provided a method of formulating the preservative and/or antimicrobial coating composition comprising or consisting of the following steps:
(a) adding about 30 to 40% (w/w) of the solvent-based coating composition and 100% (w/w) of the preservative and/or antimicrobial combination according to the invention to a stainless steel mixer bowl and whisking the mixture for about 20 minutes until a homogenous mixture is obtained;
(b) adding the remaining about 60 to 70 % (w/w) of the solvent-based coating composition to the homogeneous mixture of step (a) and whisking the mixture for a further about 30 minutes until a homogenous solvent-based preservative and/or antimicrobial coating composition mixture is obtained, wherein the ratio of the preservative and/or antimicrobial agent combination to the solvent-based coating composition in the final homogenous mixture is about 40:60 to 90:10, or about 50:50, or about 60:40, or about 70:30, or about 80:20 respectfully;
(c) decanting the homogenous composition mixture of step (b) into a container or a drum with continual stirring and/or circulation of the mixture including with the use of a centrifugal pump, thereby to prevent partial separation of the ingredients and for pumping the final solvent-based preservative and/or antimicrobial coating composition to a coating head of a coating system for coating of a substrate.

According to a further aspect of the invention there is provided a method of producing a substrate coated with the preservative and/or antimicrobial coating composition obtained with the method of the invention comprising the use of a coating system comprising one or more coating head(s) fitted to a frame having offwinds and rewinds of a desired substrate, wherein each coating head (10) comprises:
I. a reservoir tray (12) for holding a volume of the preservative and/or antimicrobial coating composition of the invention;
II. an uplift roller (14) for uplifting the preservative and/or antimicrobial coating composition to a regulation roller (16);
III. a regulation roller (16) for transferring the preservative and/or antimicrobial coating composition to an impression roller (18);
IV. an impression roller (18) for impressing the preservative and/or antimicrobial coating composition transferred by the regulation roller (16) onto the desired surface of the substrate which is supported by web support roller (20); and
V. a web support roller (20) for supporting the substrate when in contact with impression roller (18), and
wherein the method comprises the following steps:
A. decanting the mixed preservative and/or antimicrobial coating composition into a container or drum with continual stirring and/or circulation of the mixture including with the use of a centrifugal pump, in preparation for coating;
B. fitting a regulation roller (16) having a desired surface roughness to the coating head;
C. fitting an impression roller (18) having the desired width to the coating head;
D. webbing the substrate between the impression roller (18) and a web support roller (20);
E. pumping the preservative and/or antimicrobial coating composition from the container or drum into a reservoir tray (12);
F. checking the viscosity of the preservative and/or antimicrobial coating composition to ensure that it is from about 90 seconds to 4 minutes;
G. activating the coating head so that the preservative and/or antimicrobial coating composition is uplifted from the reservoir tray (12) by the uplift roller (14), is transferred to the regulation roller (16), and then transferred to the impression roller (18) which impresses the preservative and/or antimicrobial coating composition onto the desired surface of the substrate webbed between the impression roller (18) and the web support roller (20).

The regulation roller preferably has a degree of roughness of from about 1,6 to 4,8 Ra. Ra is the Roughness Average of a surfaces measured microscopic peaks and valleys.

Where there is more than one coating head, the coating system may comprise a drying tunnel fitted downstream of the each coating head for drying of the coating on the substrate between the coating heads. Typically the drying temperature is from about 40 to 60 °C, dependent on the coating speed and weight of the antimicrobial coating composition.

According to a further aspect of the invention there is provided an active substrate comprising or consisting of:
a preservative and/or antimicrobial composition comprising or consisting of the following combination of ingredients:
   0,10 - 4,00 % (w/w), or 0,15 - 2,00 % (w/w), or 0,2 - 1,00 % (w/w) or 0.10 to 0.50 (w/w) nano-Ag,
   0,05 - 4,00 % (w/w), or 0,15 - 2,50 % (w/w), or 1,50 - 3,50 % (w/w), or 2,00 - 4,00 % (w/w) Ca(OCl)₂,
   0,05 - 4,0 % (w/w), or 0,15 - 2,5 % (w/w), or 1,50 - 3,5 % (w/w), or 2,50 - 4,0 % (w/w) sodium chloride (NaCl),
   0,1% - 8,0 % (w/w), or 3,0% - 7,5 % (w/w), or 4,0% - 7,5 % (w/w), or 5,0% - 8,0 % citric acid,
   0,008 - 1,000% (w/w), or 0,020 - 0,100% (w/w), or 0,080 - 0,500% (w/w), or 0,300 to 1,000% (w/w) calcium chloride (CaCl₂), and
   any one or more of additional desiccants, including nylon or polyoxymethylene and carriers, including polyethylenes and process aids, including one or more zeolites, silica, stearates, including calcium stearate or a combination thereof to make up the remainder of the % (w/w) of the combination of preservative and/or antimicrobial agents; and
a film-forming polymer selected from the group comprising or consisting of polyethylene LDPE or LLDPE or a blend thereof, PET, PP, BOPP, cellulose, bio-polymers, TPS, PLA, non-woven PP and non-woven PET mixed with the preservative and/or antimicrobial composition at a ratio of from 1,4 : 98,6 to 6,0 : 94,0, or from 2,5 : 97,5 to 5,0 : 95,0, or from 4,0: 96,0 to 6,0 : 94,0 respectively.

Preferably, the film-forming polymer is formed from a blend of LDPE and LLDPE or TPS.

In particular, the active substrate is an extruded substrate, further in particular, a blown film extruded substrate.

The active substrate may be processed from the extruded film or a sheet into an preservative and/or antimicrobial packaging including a liner, cover, pad or bag for use in the packaging of fruit, vegetables or herbs thereby to preserve these products and/or prevent, retard, control, delay or kill fungi, including *Botrytis* sp. fungi. The liner, cover, pad and/or bag may comprise a plurality of perforated apertures.

According to a further aspect of the invention, there is provided a process for the formulation of an active substrate according to the invention, comprising or consisting of the following steps:
(A) providing a first masterbatch mixed with a film-forming polymer, selected from the group comprising or consisting of polyethylene, including LDPE or LLDPE or a blend thereof, PET, PP, BOPP, cellulose, bio-polymers, TPS, PLA, non-woven PP and non-woven PET at a ratio of from 1,4 : 98,6 to 6,0 : 94,0, or from 2,5 : 97,5 to 5,0 : 95,0, or from 4,0 : 96,0 to 6,0 : 94,0 respectively, wherein the first masterbatch consists of:
   i. 0,008 - 1,000% (w/w), or 0,020 - 0,100% (w/w), or 0,080 - 0,500% (w/w), or 0,300 to 1,000% (w/w) calcium chloride (CaCl₂);
   ii. 0,05 - 4,00 % (w/w), or 0,15 - 2,50 % (w/w), or 1,50 - 3,50 % (w/w), or 2,50 - 4,00 % (w/w) NaCl;
   iii. 0,1% - 8,0 % (w/w), or 3,0% - 7,5 % (w/w), or 4,0% - 7,5 % (w/w), or 5,0% - 8,0 % (w/w) citric acid; and
   iv. one or more additives including a desiccant, a carrier and/or process aids, including one or more zeolites, further including silica, calcium stearate or a combination of both to make up the remainder % (w/w); and
(B) providing a second masterbatch mixed with a film-forming polymer, selected from the group comprising or consisting of polyethylene, including LDPE or LLDPE or a blend thereof, PET, PP, BOPP, cellulose, bio-polymers, TPS, PLA, non-woven PP and non-woven PET at a ratio of from 1,4 : 98,6 to 6,0 : 94,0, or from 2,5 : 97,5 to 5,0 : 95,0, or from 4,0 : 96,0 to 6,0 : 94,0 respectively, wherein the second masterbatch consists of:
   i. 0,05 - 4,00 % (w/w), or 0,15 - 2,50 % (w/w), or 1,50 - 3,50 % (w/w), or 2,00 - 4,00 % (w/w) Ca(OCl)₂; and
   ii. one or more additives including a desiccant, a carrier and/or process aids, including one or more zeolites, further including silica, calcium stearate or a combination of both to make up the remainder % (w/w); and
(C) providing a third masterbatch mixed with a film-forming polymer, selected from the group comprising or consisting of polyethylene, including LDPE or LLDPE or a blend thereof, PET, PP, BOPP, cellulose, bio-polymers, TPS, PLA, non-woven PP and non-woven PET at a ratio of from 1,4 : 98,6 to 6,0 : 94,0, or from 2,5 : 97,5 to 5,0 : 95,0, or from 4,0 : 96,0 to 6,0 : 94,0 respectively, wherein the third masterbatch consists of:
   i. 0,10 - 4,00 % (w/w), or 0,15 - 2,00 % (w/w), or 0,2 - 1,00 % (w/w) or 0.10 to 0.50 (w/w) nano-Ag; and
   ii. one or more additives including a desiccant, a carrier and/or process aids, including one or more zeolites, further including silica, calcium stearate or a combination of both to make up the remainder % (w/w); and
(D) adding the mixture of step (A) into the mixture of step (B), followed by adding the mixture of step (C) to the mixture of steps (A) and (B) with continual stirring and/or circulation of the mixture including with the use of a centrifugal pump, thereby to prevent partial separation of the ingredients and for pumping the final active substrate mixture to an extruder, including a single screw blown film extruder; and
(E) extruding the active substrate of step (D) into a sheet or film.

Preferably, the film-forming polymer is formed from a blend of LDPE and LLDPE or TPS.

The active substrate may further be coated with one or more layer(s) of the preservative and/or antimicrobial coating composition of the invention on one or both surfaces of the active substrate, or a portion thereof.

The active substrate may further comprise one or more colour pigment(s) and/or ultra violet inhibitor compound(s), which are well known in the art and commercially available depending on the product desired to be included.

The extruded active substrate may optionally be corona treated to allow for print decoration or the application of coating layers, including one or more preservative and/or antimicrobial coating layers, MVTR and/or OTR coatings to enhance film performance further. In addition, colour pigment(s) and/or ultra violet inhibitors known in the art may be added if desired.

The extruded active substrate or active, coated substrate may be processed to form any one or more of a liner, cover, pad and/or bag. The liner, cover, pad and/or bag may comprise a plurality of perforated apertures.

According to a further aspect of the invention there is provided a method of preserving products selected from fruit, vegetables or herbs and/or preventing, inhibiting, controling, or delaying growth of, or killing fungi, including *Botrytis* sp. on, in, or associated with such products comprising the use of the active substrate according to the invention, or the use of the preservative and/or antimicrobial coating composition on packaging substrate of the products. The active substrate or packaging may be in the form of a liner, cover, pad and/or bag. The liner, cover, pad and/or bag may comprise a plurality of perforated apertures.

In particular, the packaging may be used for fruits such as berries, including blueberries, blackberries, raspberries, strawberries and the like, which are particularly sensitive to the use of sulfur dioxide generating preservatives, although the packaging may also be used for other fruits such as grapes, as well as for vegetables or herbs where fungal infection is problematic or where preservation is required to prevent dessication or browning of the product.

### DETAILED DESCRIPTION OF THE INVENTION

This invention relates to a preservative and/or antimicrobial composition for inclusion in an active substrate and/or a solvent-based coating for preservation of fruit, vegetables or herbs as well as an active substrate including the preservative and/or antimicrobial composition, or a solvent-based coating composition including the preservative and/or antimicrobial composition, or an active substrate including the preservative and/or antimicrobial composition and coated with the solvent-based coating composition including the preservative and/or antimicrobial composition for use in the preservation of fruit, vegetables or herbs.

The following description of the invention is provided as an enabling teaching of the invention, is illustrative of the principles of the invention and is not intended to limit the scope of the invention. It will be understood that changes can be made to the embodiment/s depicted and described, while still attaining beneficial results of the present invention.

### Preservative and/or antimicrobial coating composition

The applicant has developed a preservative and/or antimicrobial solvent-based coating composition consisting of an coating mixture (or "Carrier Mix") as listed in Table 1, together with a combination of preservative and/or antimicrobial agents.

The preservative and/or antimicrobial combination typically consists of a mixture of the following ingredients provided as % (w/w):
0,003% to 0,08% (w/w), or 0,008 % to 0,05 % (w/w), or 0,01 % to 0,05 % (w/w), or 0,05 % to 0,08 % (w/w) nano-Ag,
1,0% to 6,5% (w/w), or 2,0 % to 5,0 % (w/w), or 3,0 % to 5,5 % (w/w), or 4,0 % to 6,5 % (w/w), Ca(OCl)₂,
0,5% to 6,5% (w/w), or 2,0 % to 5,0 % (w/w), or 3,0 % to 5,5 % (w/w), or 4,0 % to 6,5 % (w/w), NaCl,
1,0% to 10,0% (w/w), or 2,0% to 6,0% (w/w), or 4,0 to 8,0% or 5,0 to 10,0% (w/w) citric acid,
0,05% to 0,65% (w/w), or 0,20 % to 0,50 % (w/w), or 0,30 % to 0,55 % (w/w), or 0,40 % to 0,65 % (w/w) CaCl₂, and
additional one or more dessicants, carriers, including polyethylenes and process aids, including one or more zeolites, silica, stearates, including calcium stearate to make up the remainder of the % (w/w) of the combination of preservative and/or antimicrobial agents.

**Table 1: Carrier Mix**

| **Component** | **% Amount (w/w)** |
|---|---|
| Elastomeric aliphatic solvent-based urethane | 30.7 |
| Polar aprotic solvent including ethyl acetate | 5.2 |
| Ethanol 95% | 31.7 |
| Organic solvent including a glycol ether including ethoxy propanol | 9.7 |
| Organic solvent including n-propyl acetate or 1-propyl acetate | 8.2 |
| Slip, scratch or rub resistance, gloss retention and overprintability additive, including micronized spherical Fischer-Tropsch linear hydrocarbon chain hardwax | 1.0 |
| Binder including nitrocellulose, including nitrocellulose RS grade 1/8 sec | 10.2 |
| Viscosity modifier including bentonite clay organically modified with a quaternary alkylammonium compound | 3.3 |
| Total | 100 |

The ratio of the preservative and/or antimicrobial agent combination to the solvent-based coating composition "Carrier Mix" in Table 1 in the mixture can be about 40:60 to 90:10, or about 50:50, or about 60:40, or about 70:30, or about 80:20 respectfully. The coating mixture has a viscosity of 60-70" Zahn#2 @ 25 °18.

The solvent-based preservative and/or antimicrobial coating composition is created by taking 30 to 40% (w/w) of the required Carrier Mix and mixing this with a 100% (w/w) of the preservative and/or antimicrobial agent combination in a stainless steel bowl and whisking for about 20 minutes until a homogenous mixture is obtained.

Thereafter, the remaining 60 to 70 % (w/w) of the Carrier Mix relative to the total weight of Carrier Mix in the final solvent-based preservative and/or antimicrobial coating composition is added to the homogeneous mixture and the final solvent-based preservative and/or antimicrobial coating composition is whisked for a further about 30 minutes until homogenous.

The final mixture, in preparation for coating, is then decanted into a container such as a drum with continual stirring and/or circulation of the mixture such as with the use of a centrifugal pump, thereby to prevent partial separation of the components whilst awaiting coating and for pumping the final mixture to the coating head for coating of the substrate.

The substrate is typically paper or a substrate comprising a blend of LDPE and LLDPE or TPS. However, it is to be appreciated that it would also be possible to use PET, PP, BOPP, cellulose, bio-polymers, PLA, a PP non-woven or a PET non-woven.

The preservative and/or antimicrobial coating composition can be coated as a monolayer or as a plurality of layers onto the whole surface of the substrate, or to a portion thereof as desired, whether an upper, lower or middle portion or a combination of these.

If desired, additional active compounds such as OTR and/or MVTR modifiers that are well known in the art can be included into the combination of preservative and/or antimicrobial agents. Alternatively, one or more additional coating layer(s) comprising one or more OTR and/or MVTR modifier(s) can be applied to the substrate or a portion thereof in addition to the one or more layers of preservative and/or antimicrobial coating composition(s).

Furthermore, the one or more preservative and/or antimicrobial coating composition(s) and/or additional coating layer(s) can include one or more coloured pigment(s) and/or ultra violet inhibitor compound(s) if desired, which are well known in the art and commercially available depending on the product desired to be included.

In one possible example the preservative and/or antimicrobial coating composition contains 30% of the combination of preservative and/or antimicrobial agent(s) and 70% of a MVTR.

The coated substrate may be a film or sheet, or may be processed to form packaging including a liner, cover, pad and/or bag. The liner, cover, pad and/or bag may comprise a plurality of perforated apertures.

The packaging is used for preservation and/or to prevent, inhibit, control, or delay growth of, or kill fungi, including *Botrytis* sp. Fungi in fruits, vegetables or herbs. In particular, the packaging may be used for fruits such as berries, including blueberries, blackberries, raspberries, strawberries and the like, which are particularly sensitive to the use of sulfur dioxide generating preservatives, although the packaging may also be used for other fruits such as grapes, as well as for vegetables or herbs where fungal infection is problematic or where preservation is required to prevent dessication or browning of the product.

### Process for coating substrate with preservative and/or antimicrobial coating composition

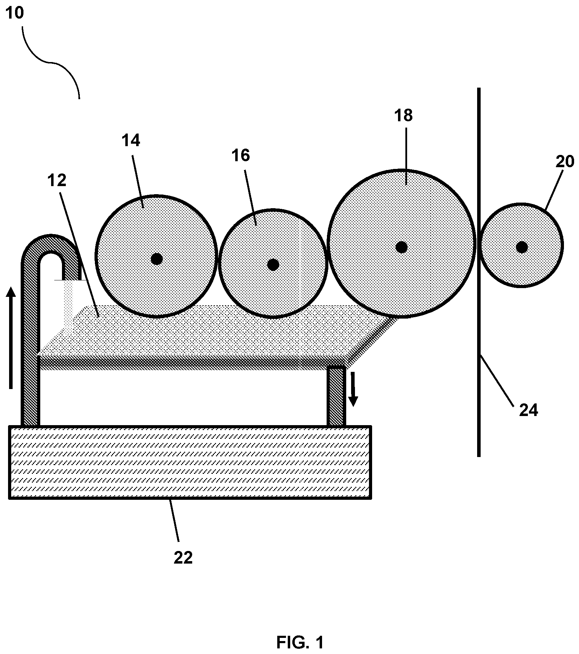

With reference to Figure 1, one or more coating head(s) are fitted to a frame having offwinds and rewinds of a desired substrate (24). Preferably the system comprises a drying tunnel fitted downstream of the one or more coating head(s) for drying of the coating on the substrate.

Each coating head (10) typically comprises:
a reservoir tray (12) for holding a volume of the preservative and/or antimicrobial coating composition of the invention;
an uplift roller (14) for uplifting the preservative and/or antimicrobial coating composition to a regulation roller (16);
a regulation roller (16) for transferring the preservative and/or antimicrobial coating composition to an impression roller (18);
an impression roller (18) for impressing the preservative and/or antimicrobial coating composition transferred by the regulation roller (16) onto the desired surface of the substrate (24) which is supported by web support roller (20); and
a web support roller (20) for supporting the substrate when in contact with impression roller (18).

The uplift roller (14) is typically a rubber coated roller having about 70-75 shore hardness.

The regulation roller (16) is typically a roller having impressions or indentations, such as a sandblasted roller for collection of the desired volume of preservative and/or antimicrobial coating composition from the uplift roller, and transfer of the preservative and/or antimicrobial coating composition to the impression roller (18). For example, the regulation roller preferably has a degrees of roughness of from about 1,6 to 4,8 Ra.

The impression roller (18) is typically a rubber coated roller having about 70-75 shore hardness and a width to match the substrate area to be coated. The edges of rubber coated surface have a chamfer of 45 degrees. The impression roller impresses the preservative and/or antimicrobial coating composition on the substrate which is supported by web support roller (20).

Where there is more than one coating head, drying between the coating heads is preferred. Typically the drying temperature is from about 40 to 60 degrees Celsius, dependent on the coating speed and weight of the preservative and/or antimicrobial coating composition.

To operate each coating head (10) the following procedure is followed:
- the mixed preservative and/or antimicrobial coating composition is decanted into the drum (22) with continual stirring and/or circulation of the mixture such as with the use of a centrifugal pump, in preparation for coating;
- the desired regulation roller (16) is fitted to the coating head;
- the desired width impression roller (18) is fitted to the coating head;
- the desired substrate is webbed between the impression roller (18) and the web support roller (20);
- the preservative and/or antimicrobial coating composition is pumped from the drum into the reservoir tray (12);
- the viscosity of the preservative and/or antimicrobial coating composition is checked against specification and may vary from 90 seconds to 4 minutes, depending on the preservative and/or antimicrobial coating composition and desired final application weight of the preservative and/or antimicrobial coating composition;
- the preservative and/or antimicrobial coating composition is uplifted from the reservoir tray (12) by the uplift roller (14), transferred to the regulation roller (16), and then transferred to the impression roller (18) which impresses the preservative and/or antimicrobial coating composition onto the desired surface of the substrate webbed between the impression roller (18) and the web support roller (20).

The primary control of the preservative and/or antimicrobial coating composition coating weight on the substrate is typically regulated by the pore or indentation size on the surface of the regulation roller (16) and the preservative and/or antimicrobial coating composition viscosity, but further adjustments to the coating weight are possible by adjusting the gaps between uplift roller (14) and regulation roller (16), and regulation roller (16) and impression roller (18). For example, the gap adjustments may vary from about 0,05 mm to about 0,15 mm with the use of appropriate feeler gauges known in the art.

### 'Active' preservative and/or antimicrobial substrate formulation

The applicant has also developed an "active substrate" in which a film-forming polymer is combined with the combination of preservative and/or antimicrobial agents.

The polymers used to form the 'active' preservative and/or antimicrobial substrate could be any of polyethylene (including low density polyethylene (LDPE) or linear low density polyethylene (LLDPE)), polyethylene terephthalate (PET), polypropylene (PP), biaxially oriented polypropylene (BOPP), cellulose, bio-polymers, and thermoplastic starch (TPS), polylactic acid (PLA), PP non-woven and PET non-woven. Preferably, the active substrate is formed from a blend of LDPE and LLDPE or TPS.

The combination of preservative and/or antimicrobial agents are nano-silver (nano-Ag), calcium hypochlorite (Ca(OCl)₂), sodium chloride (NaCl), citric acid, and calcium chloride (CaCl₂).

Optionally, the active substrate can further include a hygroscopic desiccant compound such as nylon or polyoxymethylene, and one or more polymer processing aids including one or more polyethylenes, zeolites, silica, stearates, including calcium stearate or a combination thereof.

Once formulated, the active substrate can then be extruded, typically by blown film extrusion using a single screw blown film extruder, to form a sheet or film, which can then be further processed into one or more of liners, covers, pads and bags for use in the packaging of fruit, vegetables or herbs, thereby to prevent, retard, control, delay or kill fungi, including *Botrytis* sp. fungi. The liner, cover, pad and/or bag may be further processed to include a plurality of perforated apertures.

A typical example of the active substrate includes mixing either a blend of LDPE and LLDPE polymers or TPS with a first masterbatch at a ratio of between 98% to 95% : 2% to 5% (w/w) respectively, wherein the first masterbatch consists of:
0,3% (w/w) CaCl₂;
2,5% (w/w) NaCl;
7,5% (w/w) citric acid;
5% (w/w) desiccant; and
84,7% (w/w) carrier and process aids, including one or more polyethylenes, zeolites, silica, stearates, including calcium stearate or a combination thereof,

mixing a blend of LDPE and LLDPE polymers or TPS with a second masterbatch at a ratio of between 95% to 93% : 5% to 7% (w/w) respectively, wherein the second masterbatch consists of:
   2% Ca(OCl)₂ (w/w); and
   98% (w/w) carrier and process aids, including one or more polyethylenes, zeolites, silica, stearates, including calcium stearate or a combination thereof,
mixing a blend of LDPE and LLDPE polymers or TPS third masterbatch at a ratio of between 95% to 93% : 5% to 7% (w/w) respectively, wherein the third masterbatch consists of:
   4% (w/w) Nano-Ag; and
   96% (w/w) carrier and process aids, including one or more polyethylenes, zeolites, silica, stearates, including calcium
   stearate or a combination thereof,
followed by combining the mixtures above to form the final active substrate with continual stirring and/or circulation of the combined mixture typically with the use of a centrifugal pump, thereby to prevent partial separation of the ingredients and for pumping the final active substrate mixture to a single screw blown film extruder for extrusion into a sheet or film.

The active substrate may further be coated with one or more layer(s) of the preservative and/or antimicrobial coating composition of the invention on one or both surfaces of the active substrate, or a portion thereof.

It is to be appreciated that where desired, the active substrate may further comprise one or more colour pigment(s) and/or ultra violet inhibitor compound(s), which are well known in the art and commercially available depending on the product desired to be included.

The extruded active substrate may optionally be corona treated to allow for print decoration or the application of coating layers, including one or more preservative and/or antimicrobial coating layers, MVTR and/or OTR coatings to enhance film performance further. In addition, colour pigment(s) and/or ultra violet inhibitors known in the art may be added if desired. There are a number of different desiccants and processing aids available commercially and it is to be appreciated that any of these options may be used in replacement of the examples provided above.

The extruded active substrate or active, coated substrate may be processed to form any one or more of a liner, cover, pad and/or bag.

### Active substrate film extrusion process

Extrusion was performed with the use of a single screw blown film extruder having a L/D ratio of 24:1 (i.e. the ratio of the flighted length of the screw to its outside diameter, calculated by dividing the flighted length of the screw by its nominal diameter), with annular dies of 90mm to 200mm diameter.

The blow up ratio used was 1:5 - 2:5 to 1 and the temperature profile used was from about 160 °C to about 190 °C.

The extruded film produced may optionally be corona treated to allow for print decoration or the application of coating layers, such as preservative and/or antimicrobial coatings, MVTR and/or OTR coatings to enhance film performance further. In addition, colour pigment(s) and/or ultra violet inhibitors may be added as desired.

### Trial with 'active' preservative and/or antimicrobial substrate

### Trial 1: Active substrate for grape preservation

The applicant has developed an active substrate comprising a combination of preservative and/or antimicrobial agents for use as a packaging medium for grapes. The active substrate may also regulate moisture vapor transmission and respiration.

### TEST DETAILS

| | |
|---|---|
| Commencement: | 28/6/21 @ 12:40 hours |
| Aim: | To verify, moisture retention, and preservative and/or antimicrobial properties of bag |
| Grape Varietal: | Allison |
| Origin: | South African, packed in PET punnet, with perforated lid |
| Temperature & RH at time of re-packing: | 12 °C & 100%. |

### TEST METHOD

Active substrate bags of dimensions 200mm x 150mm @ 28gsm film weight where made. The bags were not perforated to accelerate potential fungal growth and contained 250 to 300 grams of grapes. Each bag had inside a 100mm x 100mm 30gsm absorbent filter paper.

Control bags A to D were formed from standard polyethylene. Test bags E to H were formed from a blend of LDPE (2 MFI 0.922 density) and LLDPE (1 MFI 0,922 density) at a ratio of 2:1 comprising a mixture of preservative and/or antimicrobial agent master batches ("MBs"), process aids and desicant as set out below. To 50kg : 25 kg volume of LDPE : LLDPE, the following MB quantities were added:

| **2 kg MB 1** | **4 kg MB 2** | **5 kg MB 3** |
|---|---|---|
| 0,3% calcium chloride | 2% calcium hypochlorite | 4% nano-Ag |
| 2,5% sodium chloride | 98% polyethylene carrier and process aid comprising silica and calcium stearate | 96% polyethylene carrier and process aid comprising silica and calcium stearate |
| 7,5% citric acid | | |
| 5% desicant | | |
| 84,75 % polyethylene carrier and process aid comprising silica and calcium stearate | | |

Eight bunches of grapes were weighed and one bunch was placed into each of the bags A to H, following which the bags were sealed and re-weighed.

Test storage temperature for refrigeration was set at 2 °C. The bags A to H containing grapes were placed on stacked shelves in the refrigerator, with alternate control and test bags on each shelf for comparative evaluation.

### TEST RESULTS

| | |
|---|---|
| Day 1 of 15: | All bags were weighed. No measurable loss was detected, nor any fungal activity noted. |
| Day 5 of 15: | One control bag (D) and one test bag (G) were randomly selected from the bottom shelf, front row of the refrigerator. The bags were weighed and then stored at ambient temperature with exposure to sunlight for 4 days. |
| Day 9 of 15: | The control (D) and test (G) bags were opened, weighed and photographed and mould growth was detected on grapes in control bag (D). The bags were then closed again and maintained at ambient temperature with exposure to sunlight for a further 3 days. The grapes in test bag (G) showed no mould growth. |
| Day 12 of 15: | The control (D) and test (G) bags were opened, weighed and photographed and mould growth was widespread on grapes in control |
| | bag (D), and the grape stems were shriveled. The grapes in test bag (G) showed no mould growth. |
| Day 15 of 15: | The control (D) and test (G) bags were opened, weighed and photographed. Grapes in control bag (D) were all infected with mould and stems were shriveled. Slight mould growth was detected on 1 berry from the grapes in test bag (G). |

### ANALYSIS

The test bag (G) showed the ability to suppress and delay fungal infection of grapes relative to the control bag (D).

Furthermore, in the test period, grapes in test bag (G) had a total weight loss of 0,13% whereas grapes in control bag (D) had a total weight loss of 0,223%. The condition of the berries and the stems of test bag (G) relative to control bag (D) was representative of the reduced moisture loss, indicating that test bag (G) also has the ability to regulate moisture loss and therefore maintain healthier stems and berries. Results are shown in Table 2.

**Table 2: Fungal infection and moisture loss**

| **Sample** | **Initial weight (gm)** | **Weight at Day 15** | **Weight infected** | **Loss %** |
|---|---|---|---|---|
| Control D | 274.71 | 273.72 | 273.72 | 100% |
| Test G | 272.84 | 272.22 | 7.88 | 2.90% |

### Trial 2: Active substrate for blueberry perservation

### BACKGROUND

A study was undertaken to compare the applicant's active preservative and/or antimicrobial substrate bag with or without a current commercially used SO₂-dual-release generating sheet that has been formulated specially to preserve berries stored in clamshell packaging.

### TEST METHOD

The active preservative and/or antimicrobial substrate bag contained the following composition of preservative and/or antimicrobial agents:

| | |
|---|---|
| Nano Ag | 0,11 % |
| Calcium hypochlorite | 0,16 % (w/w) |
| Sodium chloride | 0,18 % (w/w) |
| Calcium chloride | 0,02 % (w/w) |
| Citric Acid | 0,54 % (w/w) |

In addition, dessicant at 0,42 % (w/w) was added. The remainder of the bag composition was made up of polyethylene carrier and process aid comprising silica and calcium stearate and a blend of LDPE (2 MFI 0.922 density) and LLDPE (1 MFI 0,922 density) at a ratio of 2:1 having a total of 98,57 % (w/w). The bags were perforated for air circulation.

The commercial SO₂-generating product was a commercially available multi-layer, dual-release liner containing sodium metabisulphite granules (SMBS) that when reacted with water vapour releases SO₂ gas. The commercial product is recommended for use with blueberries, blackberries or raspberries packaged in punnets or clamshells for protection over three to four days of transit or storage.

All treatments were applied at the packhouse after cooling the fruit from the field temperature to 6 °C. Five cartons were packed for each treatment and only one blueberry variety from one planting block was used in the treatments.

Treatments for clamshell packaging were as follows:
*Treatment 1:* Applicant's preservative and/or antimicrobial substrate perforated bag
*Treatment 3:* Applicant's preservative and/or antimicrobial substrate perforated bag and a Commercial Berrisys fast sheet

The test was performed at 6 °C and punnets of blueberries were observed after 7 days for any visual damage to the fruit. Tasting was also done to assess whether the treatment had had any negative effect on the taste of the fruit.

### RESULTS

No physical or taste damage was observed in fruit over the first 7 days of storage in either of the treatments.

### Trial 3: Active substrate plus preservative and/or antimicrobial coating for grape perservation

### BACKGROUND

The applicant tested 5 different formulations to assess their impact on the freshness of bunches of grapes (Grape varietal: Allison) during storage and distribution.

### TEST COMPONENTS

Four packaging films, 25µm thick, were created using standard blown film extrusion. Bags 150mm wide x 250mm long were manufactured from each of the films and were perforated with 8 x 6mm diameter holes.

Five bags were included in the trial with the following compositions:

### Bag 1 (Control)

67% LDPE
33% LLDPE

### Bag 2 (Test 1)

63.4% LDPE
31.6% LLDPE
5.0% MB1 containing 2% Nano Ag and 98% polyethylene carrier and process aid comprising silica and calcium stearate

### Bag 3 (Test 2)

63.4% LDPE
31.6% LLDPE
5.0% MB1 containing 2% Nano Ag and 98% polyethylene carrier and process aid comprising silica and calcium stearate

The bag further contained a sheet of 10 mm x 50 mm extruded LDPE:LLDPE (67%:33%) coated on one side with 1.5 g of coating medium comprising 0.08 g of preservative and/or antimicrobial agents consisting of 33% Calcium Hypochlorite, 16% Sodium Chloride, 49% Citric Acid and 2% Calcium Chloride to simulate a coated activated substrate.

### Bag 4 (Test 3)

63.8% LDPE
31.9% LLDPE
4.3% MB1 containing 6% Calcium Hypochlorite, 3.3% Sodium Chloride, 9.3% Citric Acid, 0.4% Calcium Chloride and 81% polyethylene carrier and process aid comprising silica and calcium stearate.

### Bag 5 (Test 4)

62% LDPE
31% LLDPE
5% MB1 containing 2% Nano Ag and 98% polyethylene carrier and process aid comprising silica and calcium stearate
1% MB2 containing 50% Calcium Oxide and 50% polyethylene carrier and process aid comprising silica and calcium stearate
1% MB3 containing 20% Calcium Hypochlorite and 80% polyethylene carrier and process aid comprising silica and calcium stearate.

### TEST METHOD

Prior to start of the trial, the bunches of grapes were checked for disease, damage and then weighed and packed in bags 1 to 5. The bags were not sealed, to replicate bunch bag conditions. Included in all bags was a 100 x 100mm 50gsm absorbent sheet placed at the bottom of the bag.

The 5 bags of grapes were packed in a cardboard box lined with an 18 micron thermoplastic starch liner having no perforations.

The box of grapes was then stored in a refrigerator at a temperature of 0 °C.

On days 17, 24 and 27 the bags were removed from the fridge and each bunch of grapes was individually weighed to record moisture loss. On day 27 the bags of packed grapes were removed from the refrigerator and stored at an ambient temperature of about 20 to 24 °C. On the 31st day the grapes were removed from the packaging and the following evaluations performed:
- Final weight
- Analysis of stem colour
- Berry firmness, graded from 1 to 5, with 5 being a good quality berry
- Diseased berries counted and weighed
- Loose berries counted and weighed

### ANALYSIS

Grapes were analysed and the weight (g) and percentage variation (VAR %) for each bag compared to the start of the trial is set out in Table 4. The reduction in weight is indicative of moisture loss and likelihood of fungal infection.

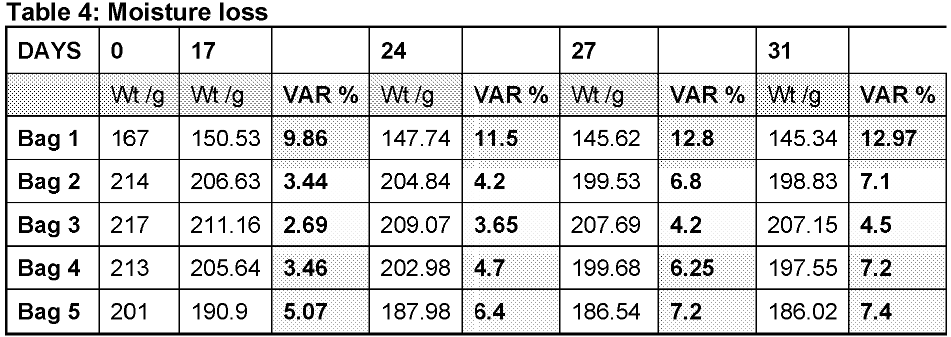

The berry assessment is provided in Table 5 below.

**Table 5: Berry assessment**

| **Sample** | **Stem colour** | **Firmness (1-5)** | **No. diseased berries** | Wt /g | % | **No. loose berries** | Wt /g | % | **comments** |
|---|---|---|---|---|---|---|---|---|---|
| **Bag 1** | Brown | 2 | 0 | | | 0 | | | Decay |
| **Bag 2** | Slightly Brown | 3 | 1 | 5.15 | 2.6 | 1 | 4.27 | 1.99 | Botritis infection |
| **Bag 3** | Brown | 4 | 0 | | | 0 | | | Nil |
| **Bag 4** | Brown | 3.5 | 0 | | | 0 | | | Nil |
| **Bag 5** | Green/ Brown | 4 | 0 | | | 0 | | | Nil |

In conclusion, the best performing bag overall was Bag 3, which simulated the use of a preservative and/or antimicrobial coating plus a preservative and/or antimicrobial active substrate. However, Bags 4 and 5 were also considered to be acceptable for preservation of the grapes and antimicrobial prevention.

## Claims

1. A preservative and/or antimicrobial composition for inclusion in a substrate to form an active substrate and/or in a solvent-based coating for preservation of fruit, vegetables or herbs, comprising or consisting of the following combination of ingredients:
calcium chloride (CaCl₂);
sodium chloride (NaCl);
citric acid;
calcium hypochlorite (Ca(OCl)₂);
nano-silver (Nano-Ag); and
one or more dessicants, carriers, including polyethylenes and process aids,
including one or more zeolites, silica, stearates, including calcium stearate or a combination thereof,
wherein the substrate comprises or consists of a substrate polymer selected from polyethylene including low density polyethylene (LDPE) or linear low density polyethylene (LLDPE) or a blend thereof, polyethylene terephthalate (PET), polypropylene (PP), biaxially oriented polypropylene (BOPP), cellulose, bio-polymers, thermoplastic starch (TPS), polylactic acid (PLA), non-woven PP and non-woven PET; and
wherein the solvent-based coating is formulated for coating one or both surfaces of a substrate comprising a single layer substrate or a multi-layer substrate, including a laminated multi-layer substrate, the substrate being selected from the group comprising or consisting of paper, polyethylene including low LDPE or LLDPE or a blend thereof, PET, PP, BOPP, cellulose, bio-polymers, TPS, PLA, non-woven PP and non-woven PET, the active substrate, or a portion thereof and comprises or consists of the following ingredients:
a solvent-based urethane composition with a greater part of a ester blend, including an elastomeric aliphatic solvent-based urethane;
one or more solvents selected from the group comprising: a polar aprotic solvent, further including ethyl acetate; a polar protic solvent, further including ethanol; and one or more organic solvents further including one or more glycol ethers, including ethoxy propanol, n-propyl acetate and/or 1-propyl acetate or any combination of said solvents;
a binder including nitrocellulose, further including a nitrocellulose RS grade 1/8 sec varnish;
optionally a slip, scratch or rub resistance, gloss retention and overprintability additive, including a micronized spherical Fischer-Tropsch linear hydrocarbon chain hardwax, including a 50% Fischer-Tropsch liquid wax mixture; and
optionally a viscosity modifier including bentonite clay organically modified with a quaternary alkylammonium compound.

2. A solvent-based coating composition in which the preservative and/or antimicrobial composition according to claim 1 is included, comprising or consisting of a mixture of the following ingredients:
(i) a combination of preservative and/or antimicrobial agents provided as percentage weight / weight (% (w/w)) of the combination of preservative and/or antimicrobial agents selected from the group comprising or consisting of:
0,003% to 0,08% (w/w), or 0,008 % to 0,05 % (w/w), or 0,01 % to 0,05 % (w/w), or 0,05 % to 0,08 % (w/w) nano-silver (nano-Ag),
1,0% to 6,5% (w/w), or 2,0 % to 5,0 % (w/w), or 3,0 % to 5,5 % (w/w), or 4,0 % to 6,5 % (w/w), calcium hypochlorite (Ca(OCl)₂), 0,5% to 6,5% (w/w), or 2,0 % to 5,0 % (w/w), or 3,0 % to 5,5 % (w/w), or 4,0 % to 6,5 % (w/w), sodium chloride (NaCl),
1,0% to 10,0% (w/w), or 2,0% to 6,0% (w/w), or 4,0 to 8,0% or 5,0 to 10,0% (w/w) citric acid,
0,05% to 0,65% (w/w), or 0,20 % to 0,50 % (w/w), or 0,30 % to 0,55 % (w/w), or 0,40 % to 0,65 % (w/w) calcium chloride (CaCl₂), and
additional one or more dessicants, carriers, including polyethylenes and process aids, including one or more zeolites, silica, stearates, including calcium stearate or a combination thereof to make up the remainder of the % (w/w) of the combination of preservative and/or antimicrobial agents; and
(ii) a solvent-based coating composition provided as % (w/w) comprising or consisting of the following ingredients:
| **(iii) Component** | **% Amount (w/w)** |
|---|---|
| solvent-based urethane with a greater part of a ester blend | 45 - 55% |
| one or more solvents selected from the group comprising: a polar aprotic solvent, further including ethyl acetate; a polar protic solvent, further including ethanol; and one or more organic solvents further including one or more glycol ethers, including ethoxy propanol, n-propyl acetate and/or 1-propyl acetate or any combination of said solvents | 25 - 35% |
| slip, scratch or rub resistance, gloss retention and overprintability additive, including micronized spherical Fischer-Tropsch linear hydrocarbon chain hardwax including a 50% Fischer-Tropsch liquid wax mixture | 1 - 5% |
| a binder including nitrocellulose, further including a nitrocellulose RS grade 1/8 sec varnish | 20 - 30% |
| a viscosity modifier including bentonite clay organically modified with a quaternary alkylammonium compound | 8 - 12% |
wherein the ratio of the preservative and/or antimicrobial agent combination to the solvent-based coating composition in the mixture is about 40:60 to 90:10, or about 50:50, or about 60:40, or about 70:30, or about 80:20 respectfully.

3. An active substrate in which the preservative and/or antimicrobial composition according to claim 1 is included comprising or consisting of a mixture of the following ingredients:
I. a combination of preservative and/or antimicrobial agents provided as % (w/w) selected from the group comprising or consisting of:
0,10 - 4,00 % (w/w), or 0,15 - 2,00 % (w/w), or 0,2 - 1,00 % (w/w) or 0.10 to 0.50 (w/w) nano-Ag,
0,05 - 4,00 % (w/w), or 0,15 - 2,50 % (w/w), or 1,50 - 3,50 % (w/w), or 2,00 - 4,00 % (w/w) Ca(OCl)₂,
0,05 - 4,00 % (w/w), or 0,15 - 2,50 % (w/w), or 1,50 - 3,50 % (w/w), or 2,50 - 4,00 % (w/w) sodium chloride (NaCl),
0,1% - 8,0 % (w/w), or 3,0% - 7,5 % (w/w), or 4,0% - 7,5 % (w/w), or 5,0% - 8,0 % citric acid,
0,008 - 1,000% (w/w), or 0,020 - 0,100% (w/w), or 0,080 - 0,500% (w/w), or 0,300 to 1,000% (w/w) calcium chloride (CaCl₂), and
one or more dessicants, carriers, including polyethylenes and process aids, including one or more zeolites, silica, stearates, including calcium stearate or a combination thereof to make up the remainder of the % (w/w) of the combination of preservative and/or antimicrobial agents; and
II. a substrate polymer selected from polyethylene including LDPE or LLDPE or a blend thereof, PET, PP, BOPP, cellulose, bio-polymers, TPS, PLA, non-woven PP and non-woven PET,
wherein the ratio of the combination of preservative and/or antimicrobial agents to the substrate polymer in the mixture is from 1,4 : 98,6 to 6,0 : 94,0, or from 2,5 : 97,5 to 5,0 : 95,0, or from 4,0 : 96,0 to 6,0 : 94,0.

4. A substrate, including an active substrate according to claim 3 coated on one or both surfaces, or a portion thereof, with a monolayer or with a plurality of layers of the preservative and/or antimicrobial coating composition according to claim 2, wherein the substrate is selected from the group comprising or consisting of paper, polyethylene LDPE or LLDPE or a blend thereof, PET, PP, BOPP, cellulose, bio-polymers, TPS, PLA, non-woven PP and non-woven PET.

5. The substrate according to claim 4, further comprising one or more additional coating layer(s) selected from the group comprising one or more oxygen transmission rate (OTR) and/or moisture vapour transmission rate (MVTR) modifier(s), wherein the layer(s) of the preservative and/or antimicrobial coating composition are applied to the substrate surface(s) or a portion thereof prior to or subsequent to application of the one or more additional coating layer(s).

6. The active substrate according to claim 3 or the coated substrate according to claim 4, that is processed to form one or more of a liner, cover, pad and/or bag for packaging of fruit, vegetables or herbs, including where the liner, cover, pad and/or bag comprises a plurality of perforated apertures.

7. The preservative and/or antimicrobial composition according to claim 1, the preservative and/or antimicrobial coating composition according to claim 2, the active substrate according to claim 3, or the coated substrate according to any one of claims 4 to 6, wherein the preservation is to prevent browning and/or dessication, including of stems and/or fruit, and/or to prevent, inhibit, control, or delay growth of, or kill fungi, including *Botrytis* sp. fungi.

8. A method of formulating the preservative and/or antimicrobial coating composition, comprising or consisting of the following steps:
(a) adding about 30 to 40% (w/w) of the solvent-based coating composition and 100% (w/w) of the preservative and/or antimicrobial combination according to claim 1 to a stainless steel mixer bowl and whisking the mixture until a homogenous mixture is obtained;
(b) adding the remaining about 60 to 70 % (w/w) of the solvent-based coating composition to the homogeneous mixture of step (a) and whisking the mixture further until a homogenous solvent-based preservative and/or antimicrobial coating composition mixture is obtained, wherein the ratio of the preservative and/or antimicrobial agent combination to the solvent-based coating composition in the final homogenous mixture is about 40:60 to 90:10, or about 50:50, or about 60:40, or about 70:30, or about 80:20 respectfully; and
(c) decanting the homogenous composition mixture of step (b) into a container or a drum with continual stirring and/or circulation of the mixture including with the use of a centrifugal pump, thereby to prevent partial separation of the ingredients and for pumping the final solvent-based preservative and/or antimicrobial coating composition to a coating head of a coating system for coating of a substrate.

9. A method of producing a substrate coated with the preservative and/or antimicrobial coating composition obtained with the method of claim 8, with the use of a coating system comprising one or more coating head(s) (10) fitted to a frame having offwinds and rewinds of a desired substrate, wherein each coating head (10) comprises:
I. a reservoir tray (12) for holding a volume of the preservative and/or antimicrobial coating composition of the invention;
II. an uplift roller (14) for uplifting the preservative and/or antimicrobial coating composition to a regulation roller (16);
III. a regulation roller (16) for transferring the preservative and/or antimicrobial coating composition to an impression roller (18);
IV. an impression roller (18) for impressing the preservative and/or antimicrobial coating composition transferred by the regulation roller (16) onto the desired surface of the substrate which is supported by web support roller (20); and
V. a web support roller (20) for supporting the substrate when in contact with impression roller (18), and
wherein the method comprises the following steps:
A. decanting the mixed preservative and/or antimicrobial coating composition into a container or drum with continual stirring and/or circulation of the mixture including with the use of a centrifugal pump, in preparation for coating;
B. fitting a regulation roller (16) having a desired surface roughness to the coating head;
C. fitting an impression roller (18) having the desired width to the coating head;
D. webbing the substrate between the impression roller (18) and a web support roller (20);
E. pumping the preservative and/or antimicrobial coating composition from the container or drum into a reservoir tray (12);
F. checking the viscosity of the preservative and/or antimicrobial coating composition to ensure that it is from about 90 seconds to 4 minutes;
G. activating the coating head so that the preservative and/or antimicrobial coating composition is uplifted from the reservoir tray (12) by the uplift roller (14), is transferred to the regulation roller (16), and then transferred to the impression roller (18) which impresses the preservative and/or antimicrobial coating composition onto the desired surface of the substrate webbed between the impression roller (18) and the web support roller (20).

10. The method according to claim 9, wherein where there is more than one coating head, the coating system comprises a drying tunnel fitted downstream of the each coating head for drying of the coating on the substrate between the coating heads.

11. A process for the formulation of an active substrate according to claim 3, comprising or consisting of the following steps:
(A) providing a first masterbatch mixed with a film-forming polymer, selected from the group comprising or consisting of polyethylene, including LDPE or LLDPE or a blend thereof, PET, PP, BOPP, cellulose, bio-polymers, TPS, PLA, non-woven PP and non-woven PET at a ratio of from 1,4 : 98,6 to 6,0 : 94,0, or from 2,5 : 97,5 to 5,0 : 95,0, or from 4,0 : 96,0 to 6,0 : 94,0 respectively, wherein the first masterbatch consists of:
i. 0,008 - 1,000% (w/w), or 0,020 - 0,100% (w/w), or 0,080 - 0,500% (w/w), or 0,300 to 1,000% (w/w) calcium chloride (CaCl₂);
ii. 0,05 - 4,00 % (w/w), or 0,15 - 2,50 % (w/w), or 1,50 - 3,50 % (w/w), or 2,50 - 4,00 % (w/w) NaCl;
iii. 0,1% - 8,0 % (w/w), or 3,0% - 7,5 % (w/w), or 4,0% - 7,5 % (w/w), or 5,0% - 8,0 % (w/w) citric acid; and
iv. one or more additives including desiccants, carriers, including polyethylenes and process aids, including one or more zeolites, silica, stearates, including calcium stearate or a combination thereof to make up the remainder % (w/w); and
(B) providing a second masterbatch mixed with a film-forming polymer, selected from the group comprising or consisting of polyethylene, including LDPE or LLDPE or a blend thereof, PET, PP, BOPP, cellulose, bio-polymers, TPS, PLA, non-woven PP and non-woven PET at a ratio of from 1,4 : 98,6 to 6,0 : 94,0, or from 2,5 : 97,5 to 5,0 : 95,0, or from 4,0 : 96,0 to 6,0 : 94,0 respectively, wherein the second masterbatch consists of:
i. 0,05 - 4,00 % (w/w), or 0,15 - 2,50 % (w/w), or 1,50 - 3,50 % (w/w), or 2,00 - 4,00 % (w/w) Ca(OCl)₂; and
ii. one or more additives including including desiccants, carriers, including polyethylenes and process aids, including one or more zeolites, silica, stearates, including calcium stearate or a combination thereof to make up the remainder % (w/w); and
(C) providing a third masterbatch mixed with a film-forming polymer, selected from the group comprising or consisting of polyethylene, including LDPE or LLDPE or a blend thereof, PET, PP, BOPP, cellulose, bio-polymers, TPS, PLA, non-woven PP and non-woven PET at a ratio of from 1,4 : 98,6 to 6,0 : 94,0, or from 2,5 : 97,5 to 5,0 : 95,0, or from 4,0 : 96,0 to 6,0 : 94,0 respectively, wherein the third masterbatch consists of:
i. 0,10 - 4,00 % (w/w), or 0,15 - 2,00 % (w/w), or 0,2 - 1,00 % (w/w) or 0.10 to 0.50 (w/w) nano-Ag; and
ii. one or more additives including including desiccants, carriers, including polyethylenes and process aids, including one or more zeolites, silica, stearates, including calcium stearate or a combination thereof to make up the remainder % (w/w); and
(D) adding the mixture of step (A) into the mixture of step (B), followed by adding the mixture of step (C) to the mixture of steps (A) and (B) with continual stirring and/or circulation of the mixture including with the use of a centrifugal pump; and
(E) extruding the active substrate of step (D) into a sheet or film with an extruder, including a single screw blown film extruder.

12. The method according to claim 11, wherein the film-forming polymer is formed from a blend of LDPE and LLDPE or TPS.

13. A method of preserving products selected from fruit, vegetables or herbs and/or preventing, inhibiting, controling, or delaying growth of, or killing fungi, including *Botrytis* sp. on, in, or associated with said products comprising the use of the preservative and/or antimicrobial composition according to claim 1, the preservative and/or antimicrobial coating composition according to claim 2, the active substrate according to claim 3, or the coated substrate according to any one of claims 4 to 6.

14. The preservative and/or antimicrobial composition according to claim 1, the preservative and/or antimicrobial coating composition according to claim 2, the active substrate according to claim 3, the coated substrate according to any one of claims 4 to 6, or the method according to claim 13, wherein the fruits are berries, including blueberries, blackberries, raspberries, strawberries.

## Patentansprüche

1. Konservierungs- und/oder antimikrobielle Zusammensetzung zur Einbeziehung in ein Substrat, um ein aktives Substrat zu bilden, und/oder in eine lösungsmittelbasierte Beschichtung zur Konservierung von Obst, Gemüse oder Kräutern, umfassend oder bestehend aus der folgenden Kombination von Inhaltsstoffen:
Calciumchlorid (CaCl₂);
Natriumchlorid (NaCl);
Zitronensäure;
Calciumhypochlorit (Ca(OCl)₂);
Nanosilber (Nano-Ag); und
ein oder mehrere Trockenmittel, Trägerstoffe, einschließlich Polyethylene, und
Verarbeitungshilfsstoffe, einschließlich eines oder mehrerer Zeolithe, Silica, Stearate, einschließlich Calciumstearat oder eine Kombination davon,
wobei das Substrat ein Substratpolymer umfasst oder aus einem Substratpolymer besteht, ausgewählt aus Polyethylen, einschließlich Polyethylen niedriger Dichte (LDPE) oder lineares Polyethylen niedriger Dichte (LLDPE) oder einer Mischung davon, Polyethylenterephthalat (PET), Polypropylen (PP), biaxial orientiertes Polypropylen (BOPP), Zellulose, Biopolymere, thermoplastische Stärke (TPS), Polymilchsäure (PLA), PP-Vliesstoff und PET-Vliesstoff;
und
wobei die lösungsmittelbasierte Beschichtung zur Beschichtung einer oder beider Oberflächen eines Substrats formuliert ist, das ein einschichtiges Substrat oder ein mehrschichtiges Substrat, einschließlich eines laminierten mehrschichtigen Substrats, umfasst, wobei das Substrat ausgewählt ist aus der Gruppe bestehend aus Papier, Polyethylen, einschließlich LDPE oder LLDPE oder einer Mischung davon, PET, PP, BOPP, Zellulose, Biopolymeren, TPS, PLA, PP-Vliesstoff und PET-Vliesstoff, des aktiven Substrats oder eines Teils davon, und die folgenden Inhaltsstoffe umfasst oder aus ihnen besteht:
eine lösungsmittelbasierte Urethan-Zusammensetzung mit einem größeren Anteil eines Ester-Gemischs, einschließlich eines elastomeren, aliphatischen, lösungsmittelbasierten Urethans;
ein oder mehrere Lösungsmittel, ausgewählt aus der Gruppe, umfassend: ein polares aprotisches Lösungsmittel, ferner einschließlich Ethylacetat; ein polares protisches Lösungsmittel, ferner einschließlich Ethanol; und ein oder mehrere organische Lösungsmittel, ferner einschließlich eines oder mehrerer Glycolether, einschließlich Ethoxypropanol, n-Propylacetat und/oder 1-Propylacetat oder eine Kombination der genannten Lösungsmittel;
ein Bindemittel, einschließlich Nitrocellulose, einschließlich eines Nitrocelluloselacks der RS-Klasse 1/8 sec.
optional ein Additiv für die Rutsch-, Kratz- und Abriebfestigkeit, der Glanzhaltung und Überdruckbarkeit, einschließlich eines mikronisierten, kugelförmigen Fischer-Tropsch-Hartwachses mit linearer Kohlenwasserstoffkette, das eine 50-prozentige flüssige Fischer-Tropsch-Wachsmischung enthält; und optional ein Viskositätsmodifikator, der Bentonit-Ton enthält, der mit einer quartären Alkylammoniumverbindung organisch modifiziert ist.

2. Eine lösungsmittelbasierte Beschichtungszusammensetzung, die die Konservierungs- und/oder antimikrobielle Zusammensetzung nach Anspruch 1 einschließt und eine Mischung der folgenden Bestandteile umfasst oder daraus besteht:
(i) Kombination aus Konservierungs- und/oder antimikrobiellen Wirkstoffen, angegeben als Gewichtsprozent (Gew.-%) der Kombination aus Konservierungs- und/oder antimikrobiellen Wirkstoffen, ausgewählt aus der Gruppe bestehend aus:
0,003 Gew.-% bis 0,08 Gew.-% oder 0,008 Gew.-% bis 0,05 Gew.-% oder 0,01 Gew.-% bis 0,05 Gew.-% oder 0,05 Gew.-% bis 0,08 Gew.-% Nanosilber (nano-Ag),
1,0 Gew.-% bis 6,5 Gew.-% oder 2,0 Gew.-% bis 5,0 Gew.-% oder 3,0 Gew.-% bis 5,5 Gew.-% oder 4,0 Gew.-% bis 6,5 Gew.-%, Calciumhypochlorit (Ca(OCl)₂), 0,5 Gew.-% bis 6,5 Gew.-% oder 2,0 Gew.-% bis 5,0 Gew.-% oder 3,0 Gew.-% bis 5,5 Gew.-% oder 4,0 Gew.-% bis 6,5 Gew.-%, Natriumchlorid (NaCl),
1,0 Gew.-% bis 10,0 Gew.-% oder 2,0 Gew.-% bis 6,0 Gew.-% oder 4,0 Gew.-% bis 8,0 Gew.-% oder 5,0 Gew.-% bis 10,0 Gew.-% Zitronensäure,
0,05 Gew.-% bis 0,65 Gew.-% oder 0,20 Gew.-% bis 0,50 Gew.-% oder 0,30 Gew.-% bis 0,55 Gew.-% oder 0,40 Gew.-% bis 0,65 Gew.-% Calciumchlorid (CaCl₂), und
zusätzlich ein oder mehrere Trockenmittel, Trägerstoffe, einschließlich Polyethylene, und Verarbeitungshilfsstoffe, einschließlich eines oder mehrerer Zeolithe, Silica, Stearate, einschließlich Calciumstearat oder eine Kombination davon, um den Rest der Gew.-% der Kombination aus Konservierungs- und/oder antimikrobiellen Wirkstoffen auszufüllen; und
(ii) eine lösungsmittelbasierte Beschichtungszusammensetzung, die in Gew.-% bereitgestellt wird und die folgenden Bestandteile enthält oder daraus besteht:
| **(iii) Komponente** | **Gew.-% Menge** |
|---|---|
| Lösungsmittelbasiertes Urethan mit einem überwiegenden Anteil an einer Estermischung | 45 - 55% |
| ein oder mehrere Lösungsmittel, ausgewählt aus der Gruppe bestehend aus: einem polaren aprotischen Lösungsmittel, ferner einschließlich Ethylacetat; einem polaren protischen Lösungsmittel, ferner einschließlich Ethanol; und einem oder mehreren organischen Lösungsmitteln, ferner einschließlich eines oder mehrerer Glycolether, wie Ethoxypropanol, n-Propylacetat und/oder 1-Propylacetat oder einer beliebigen Kombination dieser Lösungsmittel | 25 - 35% |
| Additiv für die Rutsch-, Kratz- und Abriebfestigkeit, Glanzhaltung und Überdruckbarkeit, einschließlich eines mikronisierten, kugelförmigen Fischer-Tropsch-Hartwachses mit linearer Kohlenwasserstoffkette, das eine 50-prozentige flüssige Fischer-Tropsch-Wachsmischung enthält | 1 - 5% |
| ein Bindemittel, einschließlich Nitrocellulose, ferner einschließlich eines Nitrocelluloselacks der RS-Klasse 1/8 sec. | 20 - 30% |
| Viskositätsmodifikator, der Bentonit-Ton enthält, der mit einer quartären Alkylammoniumverbindung modifiziert wurde | 8 - 12% |
wobei das Verhältnis der Kombination aus Konservierungs- und/oder antimikrobiellem Wirkstoff zur lösungsmittelbasierten Beschichtungszusammensetzung in der Mischung etwa 40:60 bis 90:10 oder etwa 50:50 oder etwa 60:40 oder etwa 70:30 oder etwa 80:20 beträgt.

3. Ein aktives Substrat, das die Konservierungs- und/oder antimikrobielle Zusammensetzung nach Anspruch 1 einschließt und eine Mischung der folgenden Bestandteile umfasst oder daraus besteht:
I. Kombination aus Konservierungs- und/oder antimikrobiellen Wirkstoffen, angegeben als Gew.-%, ausgewählt aus der Gruppe bestehend aus:
0,10 - 4,00 Gew.-% oder 0,15 - 2,00 Gew.-% oder 0,2 - 1,00 Gew.-% oder 0,10 bis 0,50 Gew.-% Nanosilber,
0,05 - 4,00 Gew.-% oder 0,15 - 2,50 Gew.-% oder 1,50 - 3,50 Gew.-% oder 2,00 - 4,00 Gew.-% Ca(OCl)₂,
0,05 - 4,00 Gew.-% oder 0,15 - 2,50 Gew.-% oder 1,50 - 3,50 Gew.-% oder 2,50 - 4,00 Gew.-% Natriumchlorid (NaCl),
0,1 Gew.-% - 8,0 Gew.-% oder 3,0 Gew.-% - 7,5 Gew.-% oder 4,0 Gew.-% - 7,5 Gew.-%
oder 5,0 Gew.-% - 8,0 Gew.-% Zitronensäure,
0,008 - 1,000 Gew.-% oder 0,020 - 0,100 Gew.-% oder 0,080 -0,500 Gew.-% oder 0,300 bis 1,000 Gew.-% Calciumchlorid (CaCl₂) und
ein oder mehrere Trockenmittel, Trägerstoffe, einschließlich Polyethylene, und Verarbeitungshilfsstoffe, einschließlich eines oder mehrerer Zeolithe, Silica, Stearate, einschließlich Calciumstearat oder eine Kombination davon, um den Rest der Gew.-% der Kombination aus Konservierungs- und/oder antimikrobiellen Wirkstoffen auszufüllen; und
II. ein Substratpolymer, ausgewählt aus Polyethylen, einschließlich LDPE oder LLDPE oder einer Mischung davon, PET, PP, BOPP, Zellulose, Biopolymere, TPS, PLA, PP-Vliesstoff und PET-Vliesstoff,
wobei das Verhältnis der Kombination aus Konservierungs- und/oder antimikrobiellen Wirkstoffen zum Substratpolymer in der Mischung 1,4 : 98,6 bis 6,0 : 94,0 oder von 2,5 : 97,5 bis 5,0 : 95,0 oder von 4,0 : 96,0 bis 6,0 : 94,0 vorliegt.

4. Substrat, einschließlich eines aktiven Substrats nach Anspruch 3, das auf einer oder beiden Oberflächen oder einem Teil davon mit einer Monoschicht oder mit einer Vielzahl von Schichten der Konservierungs- und/oder antimikrobiellen Beschichtungszusammensetzung nach Anspruch 2 beschichtet ist, wobei das Substrat ausgewählt ist aus der Gruppe bestehend aus Papier, Polyethylen LDPE oder LLDPE oder einer Mischung davon, PET, PP, BOPP, Zellulose, Biopolymeren, TPS, PLA, PP-Vliesstoff und PET-Vliesstoff.

5. Substrat nach Anspruch 4, ferner umfassend eine oder mehrere zusätzliche Beschichtungsschichten, ausgewählt aus der Gruppe, die einen oder mehrere Modifikatoren der Sauerstoffdurchlässigkeit (OTR) und/oder der Wasserdampfdurchlässigkeit (MVTR) umfasst, wobei die Schicht(en) der Konservierungs- und/oder antimikrobiellen Beschichtungszusammensetzung vor oder nach dem Aufbringen der einen oder mehreren zusätzlichen Beschichtungsschicht(en) auf die Substratoberfläche(n) oder einen Teil davon aufgebracht werden.

6. Aktives Substrat nach Anspruch 3 oder das beschichtete Substrat nach Anspruch 4, das so verarbeitet wird, dass es eines oder mehrere aus Liner, Abdeckung, Polster und/oder Beutel zur Verpackung von Obst, Gemüse oder Kräutern bildet, einschließlich wobei der Liner, die Abdeckung, das Polster und/oder der Beutel eine Vielzahl von perforierten Öffnungen aufweisen.

7. Konservierungs- und/oder antimikrobielle Zusammensetzung nach Anspruch 1, die Konservierungs- und/oder antimikrobielle Beschichtungszusammensetzung nach Anspruch 2, das aktive Substrat nach Anspruch 3 oder das beschichtete Substrat nach einem der Ansprüche 4 bis 6, wobei die Konservierung dazu dient, eine Bräunung und/oder Austrocknung, einschließlich von Stielen und/oder Früchten, zu verhindern und/oder das Wachstum von Pilzen, einschließlich Pilzen der Gattung Botrytis sp., zu verhindern, zu hemmen, zu kontrollieren oder zu verzögern oder diese abzutöten.

8. Verfahren zur Herstellung einer Konservierungs- und/oder antimikrobiellen Beschichtungszusammensetzung, das die folgenden Schritte umfasst oder daraus besteht:
(a) Zugeben von etwa 30 bis 40 Gew.-% der lösungsmittelbasierten Beschichtungszusammensetzung und 100 Gew.-% der Konservierungs- und/oder antimikrobiellen Kombination nach Anspruch 1 in eine Rührschüssel aus Edelstahl und Verquirlen der Mischung bis eine homogene Mischung entstanden ist;
(b) Zugeben der verbleibenden etwa 60 bis 70 Gew.-% der lösungsmittelbasierten Beschichtungszusammensetzung zu der homogenen Mischung aus Schritt (a) und weiteres Verrühren der Mischung, bis eine homogene Mischung aus der lösungsmittelbasierten Konservierungs- und/oder antimikrobiellen Beschichtungszusammensetzung erhalten wird, wobei das Verhältnis der Kombination aus Konservierungs- und/oder antimikrobiellem Wirkstoff zur lösungsmittelbasierten Beschichtungszusammensetzung in der endgültigen homogenen Mischung bei etwa 40:60 bis 90:10 oder etwa 50:50 oder etwa 60:40 oder etwa 70:30 oder etwa 80:20 liegt; und
(c) Umgießen der homogenen Mischung der Zusammensetzung aus Schritt (b) in einen Behälter oder ein Fass unter ständigem Rühren und/oder Umwälzen der Mischung, einschließlich unter Verwendung einer Zentrifugalpumpe, um eine teilweise Trennung der Bestandteile zu verhindern und um die fertige lösungsmittelbasierte Konservierungs- und/oder antimikrobielle Beschichtungszusammensetzung zu einem Beschichtungskopf eines Beschichtungssystems zur Beschichtung eines Substrats zu pumpen.

9. Verfahren zum Herstellen eines Substrats, das mit der nach dem Verfahren nach Anspruch 8 erhaltenen Konservierungs- und/oder antimikrobiellen Beschichtungszusammensetzung beschichtet ist, unter Verwendung eines Beschichtungssystems, das einen oder mehrere Beschichtungsköpfe (10) umfasst, die an einem Rahmen angebracht sind, der Abwickel- und Aufwickelvorrichtungen für ein gewünschtes Substrat aufweist, wobei jeder Beschichtungskopf (10) umfasst:
I. einen Vorratsbehälter (12) zur Aufnahme eines Volumens der Konservierungs- und/oder antimikrobiellen Beschichtungszusammensetzung der Erfindung;
II. eine Förderwalze (14) zum Anheben der Konservierungs- und/oder antimikrobiellen Beschichtungszusammensetzung zu einer Regulierungswalze (16);
III. eine Regulierungswalze (16) zum Übertragen der Konservierungs- und/oder antimikrobiellen Beschichtungszusammensetzung zu einem Presseur (18);
IV. einen Presseur (18) zum Aufpressen der von der Regulierungswalze (16) übertragenen Konservierungs- und/oder antimikrobiellen Beschichtungszusammensetzung auf die gewünschte Oberfläche des Substrats, das von der Bahnstützwalze (20) getragen wird; und
V. eine Bahnstützwalze (20) für das Halten des Substrats, wenn es in Kontakt mit dem Presseur (18) kommt, und
wobei das Verfahren die folgenden Schritte umfasst:
A. Umgießen der gemischten Konservierungs- und/oder antimikrobiellen Beschichtungszusammensetzung in einen Behälter oder ein Fass unter ständigem Rühren und/oder Umwälzen der Mischung, einschließlich unter Verwendung einer Zentrifugalpumpe, zur Vorbereitung der Beschichtung;
B. Anbringen einer Regulierungswalze (16) mit einer gewünschten Oberflächenrauheit am Beschichtungskopf;
C. Anbringen eines Presseurs (18) mit der gewünschten Breite am Beschichtungskopf;
D. Durchlaufenlassen des Substrats zwischen dem Presseur (18) und einer Bahnstützwalze (20);
E. Pumpen der Konservierungs- und/oder antimikrobiellen Beschichtungszusammensetzung aus dem Behälter oder Fass in einen Vorratsbehälter (12);
F. Prüfen der Viskosität der Konservierungs- und/oder antimikrobiellen Beschichtungszusammensetzung, um sicherzustellen, dass sie zwischen etwa 90 Sekunden und 4 Minuten liegt;
G. Aktivieren des Beschichtungskopfes, sodass die Konservierungs- und/oder antimikrobielle Beschichtungszusammensetzung durch die Förderwalze (14) aus dem Vorratsbehälter (12) angehoben, auf die Regulierungswalze (16) übertragen und anschließend auf den Presseur (18) übertragen wird, der die Konservierungs- und/oder antimikrobielle Beschichtungszusammensetzung auf die gewünschte Oberfläche des Substrats aufbringt, das zwischen dem Presseur (18) und der Bandstützwalze (20) verläuft.

10. Verfahren nach Anspruch 9, wobei das Beschichtungssystem, wenn mehr als ein Beschichtungskopf vorhanden ist, einen Trocknungstunnel umfasst, der jedem Beschichtungskopf nachgeschaltet angeordnet ist, um die Beschichtung auf dem Substrat zwischen den Beschichtungsköpfen zu trocknen.

11. Verfahren zur Herstellung eines aktiven Substrats nach Anspruch 3, das die folgenden Schritte umfasst oder aus diesen besteht:
(A) Bereitstellen eines ersten Masterbatches, gemischt mit einem filmbildenden Polymer, ausgewählt aus der Gruppe bestehend aus Polyethylen, einschließlich LDPE oder LLDPE oder einer Mischung davon, PET, PP, BOPP, Cellulose, Biopolymeren, TPS, PLA, PP-Vliesstoff und PET-Vliesstoff, in einem Verhältnis von 1,4 : 98,6 bis 6,0 : 94,0 oder von 2,5 : 97,5 bis 5,0 : 95,0 oder von 4,0 : 96,0 bis 6,0 : 94,0, wobei das erste Masterbatch aus Folgendem besteht:
i. 0,008 - 1,000 Gew.-% oder 0,020 - 0,100 Gew.-% oder 0,080 -0,500 Gew.-% oder 0,300 bis 1,000 Gew.-% Calciumchlorid (CaCl₂);
ii. 0,05 - 4,00 Gew.-% oder 0,15 - 2,50 Gew.-% oder 1,50 - 3,50 Gew.-% oder 2,50 bis 4,00 Gew.-% NaCl,
iii. 0,1 Gew.-% - 8,0 Gew.-% oder 3,0 Gew.-% - 7,5 Gew.-% oder 4,0 Gew.-% - 7,5 Gew.-% oder 5,0 Gew.-% - 8,0 Gew.-% Zitronensäure; und
iv. ein oder mehrere Additive, einschließlich Trockenmittel, Trägerstoffe, einschließlich Polyethylene und Verarbeitungshilfsstoffe, einschließlich eines oder mehrerer Zeolithe, Silica, Stearate, einschließlich Calciumstearat oder eine Kombination davon, um den Rest der Gew.-% herzustellen; und
(B) Bereitstellen eines zweiten Masterbatches, gemischt mit einem filmbildenden Polymer, ausgewählt aus der Gruppe bestehend aus Polyethylen, einschließlich LDPE oder LLDPE oder einer Mischung davon, PET, PP, BOPP, Cellulose, Biopolymeren, TPS, PLA, PP-Vliesstoff und PET-Vliesstoff, in einem Verhältnis von 1,4 : 98,6 bis 6,0 : 94,0 oder von 2,5 : 97,5 bis 5,0 : 95,0 oder von 4,0 : 96,0 bis 6,0 : 94,0, wobei das zweite Masterbatch aus Folgendem besteht:
i. 0,05 - 4,00 Gew.-% oder 0,15 - 2,50 Gew.-% oder 1,50 - 3,50 Gew.-% oder 2,00 - 4,00 Gew.-% Ca(OCl)₂; und
ii. einem oder mehreren Additiven, einschließlich Trockenmittel, Trägerstoffe, einschließlich Polyethylene, und Verarbeitungshilfsstoffe, einschließlich eines oder mehrerer Zeolithe, Silica, Stearate, einschließlich Calciumstearat oder einer Kombination davon, um den Rest der Gew.-% herzustellen; und
(C) Bereitstellen eines dritten Masterbatches, gemischt mit einem filmbildenden Polymer, ausgewählt aus der Gruppe bestehend aus Polyethylen, einschließlich LDPE oder LLDPE oder einer Mischung davon, PET, PP, BOPP, Cellulose, Biopolymeren, TPS, PLA, PP-Vliesstoff und PET-Vliesstoff, in einem Verhältnis von 1,4 : 98,6 bis 6,0 : 94,0 oder von 2,5 : 97,5 bis 5,0 : 95,0 oder von 4,0 : 96,0 bis 6,0 : 94,0, wobei das dritte Masterbatch aus Folgendem besteht:
i. 0,10 - 4,00 Gew.-% oder 0,15 - 2,00 Gew.-% oder 0,2 - 1,00 Gew.-% oder 0,10 bis 0,50 Gew.-% Nanosilber; und
ii. einem oder mehreren Additiven, einschließlich Trockenmittel, Trägerstoffe, einschließlich Polyethylene, und Verarbeitungshilfsstoffe, einschließlich eines oder mehrerer Zeolithe, Silica, Stearate, einschließlich Calciumstearat oder einer Kombination davon, um den Rest der Gew.-% herzustellen; und
(D) Zugeben der Mischung aus Schritt (A) in die Mischung aus Schritt (B), gefolgt vom Zugeben der Mischung aus Schritt (C) zu der Mischung aus den Schritten (A) und (B) unter ständigem Rühren und/oder Umwälzen der Mischung, einschließlich unter Verwendung einer Zentrifugalpumpe; und
(E) Extrudieren des aktiven Substrats aus Schritt (D) mit einem Extruder, einschließlich einem Einschnecken-Blasfolienextruder, zu einer Folie oder einem Film.

12. Verfahren nach Anspruch 11, wobei das filmbildende Polymer aus einer Mischung aus LDPE und LLDPE oder TPS gebildet wird.

13. Verfahren zum Konservieren von Produkten, ausgewählt aus Obst, Gemüse oder Kräutern, und/oder zur Verhinderung, Hemmung, Kontrolle oder Verzögerung des Wachstums von oder zur Abtötung von Pilzen, einschließlich Botrytis sp., auf, in oder in Verbindung mit den genannten Produkten, umfassend die Verwendung der Konservierungs- und/oder antimikrobiellen Zusammensetzung nach Anspruch 1, der Konservierungs- und/oder antimikrobiellen Beschichtungszusammensetzung nach Anspruch 2, des aktiven Substrats nach Anspruch 3 oder des beschichteten Substrats nach einem der Ansprüche 4 bis 6.

14. Konservierungs- und/oder antimikrobielle Zusammensetzung nach Anspruch 1, die Konservierungs- und/oder antimikrobielle Beschichtungszusammensetzung nach Anspruch 2, das aktive Substrat nach Anspruch 3, das beschichtete Substrat nach einem der Ansprüche 4 bis 6, oder das Verfahren nach Anspruch 13, wobei die Früchte Beeren sind, einschließlich Blaubeeren, Brombeeren, Himbeeren, Erdbeeren.

## Revendications

1. Composition d'agent conservateur et/ou d'agent antimicrobien destinée à être incluse dans un substrat pour former un substrat actif et/ou dans un revêtement à base de zervant à la conservation de fruits, de légumes ou d'herbes, comprenant ou constitué de la combinaison d'ingrédients suivante :
Chlorure de calcium (CaCl₂) ;
Chlorure de sodium (NaCl) ;
Acide citrique ;
Hypochlorite de calcium (Ca(OCl)₂) ;
Nano-argent (Nano-Ag) ; et
un ou plusieurs desséchants, vecteurs, y compris les polyéthylènes et auxiliaires de traitement, y compris une ou plusieurs zéolites, silice, stéarates, y compris le stéarate de calcium ou une combinaison de ceux-ci,
dans lequel le substrat comprend ou est constitué d'un polymère de substrat choisi parmi le polyéthylène, y compris le polyéthylène basse densité (LDPE) ou le polyéthylène basse densité linéaire (LLDPE) ou un mélange de ceux-ci, le polyéthylène téréphtalate (PET), le polypropylène (PP), le polypropylène orienté biaxialement (BOPP), la cellulose, les biopolymères, l'amidon thermoplastique (TPS), l'acide polylactique (PLA), le PP non tissé et le PET non tissé ; et
dans lequel le revêtement à base de solvant est formulé pour le revêtement une ou les deux surfaces d'un substrat comprenant un substrat monocouche ou un substrat multicouche, y compris un substrat multicouche stratifié, le substrat étant choisi dans le groupe comprenant ou constitué de papier, de polyéthylène, y compris de LDPE faible ou de LLDPE ou un mélange de ceux-ci, de PET, de PP, de BOPP, de cellulose, de biopolymères, de TPS, de PLA, de PP non tissé et de PET non tissé, le substrat actif ou une partie de celui-ci et comprend ou consiste en les ingrédients suivants :
une composition d'uréthane à base de solvant avec une grande partie d'un mélange d'esters, y compris un uréthane élastomère à base de solvant aliphatique ;
un ou plusieurs solvants choisis dans le groupe comprenant : un solvant aprotique polaire, y compris en outre l'acétate d'éthyle ; un solvant protique polaire, y compris en outre l'éthanol ; et un ou plusieurs solvants organiques y compris en outre un ou
plusieurs éthers de glycol, y compris l'éthoxypropanol, l'acétate de n-propyle et/ou l'acétate de 1-propyle ou toute combinaison desdits solvants ;
un liant y compris de la nitrocellulose, y compris en outre un vernis à séchage rapide 1/8 sec de nitrocellulose de qualité à solubilité standard (RS) ;
éventuellement, un additif de résistance au glissement, aux rayures ou au frottement, de rétention de brillance et de surimpression, y compris une cire dure à chaîne hydrocarbonée linéaire Fischer-Tropsch sphérique micronisée, y compris un mélange de cire liquide Fischer-Tropsch à 50 % ; et éventuellement un modificateur de viscosité y compris une argile bentonite organiquement modifiée avec un composé alkylammonium quaternaire.

2. Composition de revêtement à base de solvant dans laquelle la composition d'agent conservateur et/ou d'agent antimicrobien selon la revendication 1 est incluse, comprenant ou constitué du mélange des ingrédients suivants :
(i) une combinaison d'agents conservateurs et/ou d'agents antimicrobiens fournie en pourcentage de poids/poids (% (p/p)) de la combinaison d'agents conservateurs et/ou d'agents antimicrobiens choisie dans le groupe comprenant ou constitué de :
0,003 % à 0,08 % (p/p), ou 0,008 % à 0,05 % (p/p), ou 0,01 % à 0,05 % (p/p), ou 0,05 % à 0,08 % (p/p) de nano-argent (nano-Ag),
1,0 % à 6,5 % (p/p), ou 2,0 % à 5,0 % (p/p), ou 3,0 % à 5,5 % (p/p), ou 4,0 % à 6,5 % (p/p) d'hypochlorite de calcium (Ca(OCl)₂), 0,5 % à 6,5 % (p/p), ou
2,0 % à 5,0 % (p/p), ou 3,0 % à 5,5 % (p/p), ou 4,0 % à 6,5 % (p/p) de chlorure de sodium (NaCl),
1,0 % à 10,0 % (p/p), ou 2,0 % à 6,0 % (p/p), ou 4,0 à 8,0 % ou 5,0 à 10,0 % (p/p) d'acide citrique,
0,05 % à 0,65 % (p/p), ou 0,20 % à 0,50 % (p/p), ou 0,30 % à 0,55 % (p/p), ou 0,40 % à 0,65 % (p/p) de chlorure de calcium (CaCl₂), et
un ou plusieurs desséchants supplémentaires, vecteurs, y compris des polyéthylènes et auxiliaires de traitement, y compris une ou plusieurs zéolites, silice, stéarates, y compris le stéarate de calcium ou une combinaison de ceux-ci, pour constituer le reste du % (p/p) de la combinaison d'agents conservateurs et/ou d'agents antimicrobiens ; et
(ii) une composition de revêtement à base de solvant fournie en % (p/p) comprenant ou constitué des ingrédients suivants :
| **(iii) Constituant** | **Quantité en % (p/p)** |
|---|---|
| uréthane à base de solvant avec une grande partie d'un mélange d'esters | 45 à 55 % |
| un ou plusieurs solvants choisis dans le groupe comprenant : un solvant aprotique polaire, y compris en outre de l'acétate d'éthyle ; un solvant protique polaire, y compris en outre de l'ethanol ; et un ou plusieurs solvants organiques y compris en outre un ou plusieurs éthers de glycol, y compris de I'éthoxypropanol, de l'acétate de n-propyle et/ou de l'acétate de 1-propyle ou n'importe quelle combinaison desdits solvants | 25 à 35 % |
| Additif de résistance au glissement, aux rayures ou au frottement, de rétention de brillance et de surimpression, y compris une cire dure à chaîne hydrocarbonée linéaire Fischer-Tropsch sphérique micronisée y compris un mélange de cire liquide Fischer-Tropsch à 50 % | 1 à 5 % |
| un liant y compris de la nitrocellulose, y compris en outre un vernis à séchage rapide 1/8 sec de nitrocellulose de qualité à solubilité standard (RS) | 20 à 30 % |
| modificateur de viscosité y compris une argile bentonite organiquement modifiée avec un composé alkylammonium quaternaire | 8 à 12 % |
dans lequel le rapport de la combinaison d'agent conservateur et/ou d'agent antimicrobien à la composition de revêtement à base de solvant dans le mélange est d'environ 40:60 à 90:10, ou d'environ 50:50, ou d'environ 60:40, ou d'environ 70:30, ou d'environ 80:20 respectivement.

3. Substrat actif dans lequel est inclus la composition d'agent conservateur et/ou d'agent antimicrobien selon la revendication 1, comprenant ou constitué d'un mélange des ingrédients suivants :
I. une combinaison d'agents conservateurs et/ou d'agents antimicrobiens fournis en % (p/p) choisis dans le groupe comprenant ou constitué de :
0,10 à 4,00 % (p/p), ou 0,15 à 2,00 % (p/p), ou 0,2 à 1,00 % (p/p) ou 0,10 à 0,50 (p/p) de nano-Ag,
0,05 à 4,00 % (p/p), ou 0,15 à 2,50 % (p/p), ou 1,50 à 3,50 % (p/p), ou 2,00 à 4,00 % (p/p) de Ca(OCl)₂,
0,05 à 4,00 % (p/p), ou 0,15 à 2,50 % (p/p), ou 1,50 à 3,50 % (p/p), ou 2,50 à 4,00 % (p/p) de chlorure de sodium (NaCl),
0,1 % à 8,0 % (p/p), ou 3,0 % à 7,5 % (p/p), ou 4,0 % à 7,5 % (p/p), ou 5,0 % à 8,0 % d'acide citrique,
0,008 à 1,000 % (p/p), ou 0,020 à 0,100 % (p/p), ou 0,080 à 0,500 % (p/p), ou 0,300 à 1,000 % (p/p) de chlorure de calcium (CaCl₂), et
un ou plusieurs desséchants, vecteurs, y compris des polyéthylènes et des auxiliaires de traitement, y compris une ou plusieurs zéolites, silice, stéarates, y compris le stéarate de calcium ou une combinaison de ceux-ci pour constituer le reste du % (p/p) de la combinaison d'agents conservateurs et/ou d'agents antimicrobiens ; et
II. un polymère de substrat choisi parmi le polyéthylène, y compris LDPE ou LLDPE ou un mélange de ceux-ci, PET, PP, BOPP, cellulose, biopolymères, TPS, PLA, PP non tissé et PET non tissé,
dans lequel le rapport de la combinaison d'agents conservateurs et/ou d'agents antimicrobiens au polymère de substrat dans le mélange est de 1,4 : 98,6 à 6,0 : 94,0, ou à partir de 2,5 : 97,5 à 5,0 : 95,0, ou à partir de 4,0 : 96,0 à 6,0 : 94,0.

4. Substrat, y compris un substrat actif selon la revendication 3 revêtu sur une ou les deux surfaces, ou une partie de celles-ci, d'une monocouche ou d'une pluralité de couches de la composition de revêtement d'agent conservateur et/ou d'agent antimicrobien selon la revendication 2, dans lequel le substrat est choisi dans le groupe comprenant ou constitué de papier, de polyéthylène de LDPE ou de LLDPE ou un mélange de ceux-ci, de PET, de PP, de BOPP, de cellulose, de biopolymères, de TPS, de PLA, de PP non tissé et de PET non tissé.

5. Substrat selon la revendication 4, comprenant en outre une ou plusieurs couches de revêtement supplémentaires choisies dans le groupe comprenant un ou plusieurs modificateurs de vitesse de transmission de l'oxygène (OTR) et/ou de vitesse de transmission de la vapeur d'eau (MVTR), dans lequel la ou les couche(s) de la composition de revêtement d'agent conservateur et/ou d'agent antimicrobien sont appliquées sur la ou les surfaces ou une partie de celles-ci avant ou après l'application de la ou des couches de revêtement supplémentaires.

6. Substrat actif selon la revendication 3 ou substrat revêtu selon la revendication 4, qui est traité pour former un ou plusieurs parmi une doublure, une couverture, un tampon et/ou un sac destiné à l'emballage de fruits, de légumes ou d'herbes, y compris dans lequel la doublure, la couverture, le tampon et/ou le sac comprend une pluralité d'ouvertures perforées.

7. Composition d'agent conservateur et/ou d'agent antimicrobien selon la revendication 1, composition de revêtement d'agent conservateur et/ou d'agent antimicrobien selon la revendication 2, substrat actif selon la revendication 3, ou substrat revêtu selon l'une quelconque des revendications 4 à 6, dans laquelle la conservation est destinée à empêcher le brunissement et/ou le dessèchement, y compris des tiges et/ou des fruits, et/ou à prévenir, inhiber, contrôler ou retarder la croissance de champignons ou leur destruction, y compris les champignons Botrytis sp.

8. Procédé de formulation de la composition de revêtement d'agent conservateur et/ou d'agent antimicrobien, comprenant ou constitué des étapes suivantes :
(a) l'ajout d'environ 30 à 40 % (p/p) de la composition de revêtement à base de solvant et 100 % (p/p) de la combinaison d'agent conservateur et/ou d'agent antimicrobien selon la revendication 1 à un bol mélangeur en acier inoxydable et le fouettage du mélange jusqu'à l'obtention d'un mélange homogène ;
(b) l'ajout des 60 à 70 % (p/p) restants de la composition de revêtement à base de solvant au mélange homogène de l'étape (a) et le fouettage du mélange en outre jusqu'à l'obtention d'un mélange homogène de la composition de revêtement d'agent conservateur et/ou d'agent antimicrobien à base de solvant , dans lequel le rapport de la combinaison d'agent conservateur et/ou d'agent antimicrobien à la composition de revêtement à base de solvant dans le mélange homogène final étant respectivement d'environ 40:60 à 90:10, d'environ 50:50, d'environ 60:40, environ 70:30, environ 80:20
(c) la décantation du mélange de composition homogène de l'étape (b) dans un récipient ou un fût avec l'agitation et/ou la circulation continues du mélange, y compris à l'aide d'une pompe centrifuge, ce qui permet d'empêcher la séparation partielle des ingrédients et le pompage de la composition finale de revêtement d'agent conservateur et/ou d'agent antimicrobien à base de solvant vers une tête de revêtement d'un système de revêtement destiné au revêtement d'un substrat.

9. Procédé de production d'un substrat revêtu de la composition de revêtement d'agent conservateur et/ou d'agent antimicrobien obtenue par le procédé de la revendication 8, avec l'utilisation d'un système de revêtement comprenant une ou plusieurs têtes de revêtement (10) montées sur un cadre présentant les déroulages et les rembobinages d'un substrat désiré, dans lequel chaque tête de revêtement (10) comprend :
I. un plateau réservoir (12) destiné à contenir un volume de la composition de revêtement d'agent conservateur et/ou d'agent antimicrobien de l'invention ;
II. un rouleau de soulèvement (14) destiné à soulever la composition de revêtement d'agent conservateur et/ou d'agent antimicrobien sur un rouleau de régulation (16) ;
III. un rouleau de régulation (16) destiné à transférer la composition de revêtement d'agent conservateur et/ou d'agent antimicrobien sur un rouleau d'impression (18) ;
IV. un rouleau d'impression (18) destiné à imprimer la composition de revêtement d'agent conservateur et/ou d'agent antimicrobien transférée par le rouleau de régulation (16) sur la surface souhaitée du substrat qui est supporté par le rouleau de support de bande (20) ; et
V. un rouleau de support de bande (20) destiné à supporter le substrat lorsqu'il est en contact avec le rouleau d'impression (18), et
dans lequel le procédé comprend les étapes suivantes :
A. la décantation de la composition de revêtement d'agent conservateur et/ou d'agent antimicrobien mélangée dans un récipient ou un fût avec l'agitation et/ou la circulation continues du mélange, y compris à l'aide d'une pompe centrifuge, en préparation du revêtement ;
B. le montage d'un rouleau de régulation (16) présentant une rugosité de surface souhaitée sur la tête de revêtement ;
C. le montage d'un rouleau d'impression (18) présentant la largeur souhaitée sur la tête de revêtement ;
D. le voilage du substrat entre le rouleau d'impression (18) et un rouleau de support de bande (20) ;
E. le pompage de la composition de revêtement d'agent conservateur et/ou d'agent antimicrobien à partir du récipient ou du fût dans un plateau réservoir (12) ;
F. la vérification de la viscosité de la composition de revêtement d'agent conservateur et/ou d'agent antimicrobien pour s'assurer qu'elle est comprise entre environ 90 secondes et 4 minutes ;
G. l'activation de la tête de revêtement de manière à ce que la composition de revêtement d'agent conservateur et/ou antimicrobien soit soulevée du plateau réservoir (12) par le rouleau de soulèvement (14), transférée au rouleau de régulation (16), puis transférée au rouleau d'impression (18) qui imprime la composition de revêtement d'agent conservateur et/ou d'agent antimicrobien sur la surface souhaitée de la bande de substrat entre le rouleau d'impression (18) et le rouleau de support de bande (20).

10. Procédé selon la revendication 9, dans lequel lorsqu'il y a plus d'une tête de revêtement, le système de revêtement comprend un tunnel de séchage monté en aval de chaque tête de revêtement destiné à sécher le revêtement sur le substrat entre les têtes de revêtement.

11. Traitement destiné à la formulation d'un substrat actif selon la revendication 3, comprenant ou constitué des étapes suivantes :
(A) la fourniture d'un premier mélange maître mélangé à un polymère formant un film, choisi dans le groupe comprenant ou constitué de polyéthylène, y compris du LDPE ou du LLDPE ou d'un mélange de ceux-ci, de PET, de PP, de BOPP, de cellulose, de biopolymères, de TPS, de PLA, de PP non tissé et de PET non tissé dans un rapport de 1,4 : 98,6 à 6,0 : 94,0, ou à partir de 2,5 : 97,5 à 5,0 : 95,0, ou à partir de 4,0 : 96,0 à 6,0 : 94,0 respectivement, dans lequel le premier mélange maître est constitué de :
i. 0,008 à 1 000 % (p/p), ou 0,020 à 0,100 % (p/p), ou 0,080 à 0,500 % (p/p), ou 0,300 à 1 000 % (p/p) de chlorure de calcium (CaCl₂) ;
ii. 0,05 à 4,00 % (p/p), ou 0,15 à 2,50 % (p/p), ou 1,50 à 3,50 % (p/p), ou 2,50 à 4,00 % (p/p) de NaCl ;
iii. 0,1 % à 8,0 % (p/p), ou 3,0 % à 7,5 % (p/p), ou 4,0 % à 7,5 % (p/p), ou 5,0 % à 8,0 % (p/p) d'acide citrique ; et
iv. un ou plusieurs additifs, y compris des desséchants, des vecteurs, y compris des polyéthylènes et des auxiliaires de traitement, y compris une ou plusieurs zéolites, de la silice, des stéarates, y compris le stéarate de calcium ou une combinaison de ceux-ci, pour constituer le pourcentage restant (p/p) ; et
(B) la fourniture d'un deuxième mélange maître mélangé à un polymère formant un film, choisi dans le groupe comprenant ou constitué de polyéthylène, y compris du LDPE ou du LLDPE ou d'un mélange de ceux-ci, de PET, de PP, de BOPP, de cellulose, de biopolymères, de TPS, de PLA, de PP non tissé et de PET non tissé dans un rapport de 1,4 : 98,6 à 6,0 : 94,0, ou à partir de 2,5 : 97,5 à 5,0 : 95,0, ou à partir de 4,0 : 96,0 à 6,0 : 94,0 respectivement, dans lequel le deuxième mélange maître est constitué de :
i. 0,05 à 4,00 % (p/p), ou 0,15 à 2,50 % (p/p), ou 1,50 à 3,50 % (p/p), ou 2,00 à 4,00 % (p/p) de Ca(OCl)₂ ; et
ii. un ou plusieurs additifs, y compris des desséchants, des vecteurs, y compris des polyéthylènes et des auxiliaires de traitement, y compris une ou plusieurs zéolites, de la silice, des stéarates, y compris le stéarate de calcium ou une combinaison de ceux-ci, pour constituer le pourcentage restant (p/p) ; et
(C) la fourniture d'un troisième mélange maître mélangé à un polymère formant un film, choisi dans le groupe comprenant ou constitué de polyéthylène, y compris du LDPE ou du LLDPE ou d'un mélange de ceux-ci, de PET, de PP, de BOPP, de cellulose, de biopolymères, de TPS, de PLA, de PP non tissé et de PET non tissé dans un rapport de 1,4 : 98,6 à 6,0 : 94,0, ou à partir de 2,5 : 97,5 à 5,0 : 95,0, ou à partir de 4,0 : 96,0 à 6,0 : 94,0 respectivement, dans lequel le troisième mélange maître est constitué de :
i. 0,10 à 4,00 % (p/p), ou 0,15 à 2,00 % (p/p), ou 0,2 à 1,00 % (p/p) ou 0,10 à 0,50 (p/p) nano-Ag ; et
ii. un ou plusieurs additifs, y compris des desséchants, des vecteurs, y compris des polyéthylènes et des auxiliaires de traitement, y compris une ou plusieurs zéolites, de la silice, des stéarates, y compris le stéarate de calcium ou une combinaison de ceux-ci, pour constituer le pourcentage restant (p/p) ; et
(D) l'ajout du mélange de l'étape (A) au mélange de l'étape (B), puis l'ajout du mélange de l'étape (C) au mélange des étapes (A) et (B) avec l'agitation et/ou la circulation continues du mélange, y compris à l'aide d'une pompe centrifuge ; et
(E) l'extrusion du substrat actif de l'étape (D) en une feuille ou un film avec une extrudeuse, y compris une extrudeuse de film soufflé à vis unique.

12. Procédé selon la revendication 11, dans lequel le polymère formant un film est formé à partir d'un mélange de LDPE et LLDPE ou TPS.

13. Procédé de conservation de produits choisis parmi des fruits, des légumes ou des herbes et/ou de prévention, d'inhibition, de contrôle ou de retardement de la croissance ou de destruction de champignons, y compris *Botrytis* sp. sur, dans ou associés auxdits produits comprenant l'utilisation de la composition d'agent conservateur et/ou d'agent antimicrobien selon la revendication 1, de la composition de revêtement d'agent conservateur et/ou d'agent antimicrobien selon la revendication 2, du substrat actif selon la revendication 3, ou du substrat revêtu selon l'une quelconque des revendications 4 à 6.

14. Composition d'agent conservateur et/ou d'agent antimicrobien selon la revendication 1, composition de revêtement d'agent conservateur et/ou d'agent antimicrobien selon la revendication 2, substrat actif selon la revendication 3, substrat revêtu selon l'une quelconque des revendications 4 à 6, ou procédé selon la revendication 13, dans laquelle les fruits sont des baies, y compris des myrtilles, des mûres, des framboises, des fraises.
